(19) Europäisches Patentamt
European Patent Office
Office européen des brevets

(11) **EP 4 760 233 A1**

(12) **EUROPÄISCHE PATENTANMELDUNG**

(43) Veröffentlichungstag:
**17.06.2026 Patentblatt 2026/25**

(21) Anmeldenummer: **25210535.8**

(22) Anmeldetag: **22.10.2025**

(51) Internationale Patentklassifikation (IPC):
**G01N 11/08** (2006.01)     **B29B 7/32** (2006.01)
**G01N 11/00** (2006.01)

(52) Gemeinsame Patentklassifikation (CPC):
**G01N 11/08;** B29C 2948/922; G01N 2011/0026;
G01N 2011/0046; G01N 2011/006

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **14.12.2024 EP 24220017**
**11.08.2025 EP 25195056**

(71) Anmelder: **Promix Solutions AG**
**8406 Winterthur (CH)**

(72) Erfinder: **Heusser, Rolf**
**8400 Winterthur (CH)**

(74) Vertreter: **Herrmann, Johanna**
**Industrial Property Services GmbH**
**Rosenweg 14**
**4303 Kaiseraugst (CH)**

(54) **KONTINUIERLICHES POLYMERVERARBEITUNGSVERFAHREN MIT INLINE-VISKOSITÄTSMESSVERFAHREN**

(57)    Die Erfindung betrifft ein kontinuierliches Polymerverarbeitungsverfahren enthaltend ein Inline-Viskositätsmessverfahren zur Messung einer Druckdifferenz zur Bestimmung einer Viskosität eines fluiden Polymerstroms. Der fluide Polymerstrom durchströmt eine in einem geschlossenen Kanal (1) angeordnete Messstrecke, in welcher zumindest ein Einbauelement (5) angeordnet ist, wobei ein Eintrittsdruck stromaufwärts des Einbauelements (5) und ein Austrittsdruck an einem Austrittsende (4) gemessen wird. Mittels einer Rechnereinheit (8) wird eine Druckdifferenz zwischen dem Eintrittsdruck und dem Austrittsdruck ermittelt. Eine Regelung einer Viskosität des fluiden Polymerstroms unter Verwendung des mittels des Inline-Viskositätsmessverfahrens erhaltenen Viskositätsmesswerts erfolgt mittels eines geschlossenen Regelkreises.

Fig. 1a

EP 4 760 233 A1

**Beschreibung**

<u>Hintergrund</u>

Die Erfindung betrifft ein kontinuierliches Polymerverarbeitungsverfahren enthaltend ein Inline-Viskositätsmessverfahren zur Messung einer Viskosität eines Polymers. Die Erfindung betrifft insbesondere die Verwendung des Inline-Viskositätsmessverfahrens in einem kontinuierlichen Polymerverarbeitungsverfahren für Polyester. Die Erfindung betrifft insbesondere das Inline-Viskositätsmessverfahren, welches zur Ermittlung eines Signals verwendet werden kann, welches mit einem aus der Messung erhaltenen Viskositätsmesswert korreliert oder davon abgeleitet werden kann.

Typische kontinuierliche Polymerverarbeitungsverfahren umfassen Extrusionsverfahren, Faserherstellungsverfahren, Granulationsverfahren.

Polyester, beispielsweise Polyethylenterephthalat (PET), ist eine vielfach eingesetzte Klasse von Kunststoffmaterialien mit sehr guten Eigenschaften. Als Polyester werden in dieser Anmeldung Polymere mit Esterfunktion in der Hauptkette verstanden. Dazu gehören unter anderem thermoplastische Polyethylenterephtalate (PET), thermoplastische Polyesterelastomere (TPC), Polybutylenterephtalat (PBT) und thermoplastische Polycarbonate (PC). Polyester sind nicht einfach zu verarbeiten, da sie unter anderem sehr feuchtigkeitsempfindlich sind und sich die Polyester als Polymere bei der Verarbeitung im aufgeschmolzenen Zustand auch leicht zersetzen. Auch können Polyester als Rezyklate wieder in den Prozesskreislauf zurückgeführt werden. Entsprechend ist es wichtig, die Qualität bei der Verarbeitung von Polyester kontinuierlich zu kontrollieren und gegebenenfalls, wenn nötig, die Qualität zu beeinflussen.

<u>Stand der Technik</u>

Vorbekannte Viskositätsmessvorrichtungen für die prozessbegleitende Messung der Viskosität von Polymeren sind derart ausgebildet, dass die Viskosität des Polymers mittels einer Druckdifferenz über einer Blende oder einer Kapillare ermittelbar ist. Neben derartigen prozessbegleitenden Messungen gibt es die Möglichkeit, eine Polymerprobe aus einem Verfahren zu entnehmen und in einem Labor zu untersuchen. Eine Laboruntersuchung ist aber für eine prozessbegleitende Überwachung, Steuerung oder Regelung des Verfahrens nicht geeignet, da das Messergebnis erst zu einem viel späteren Zeitpunkt verfügbar ist, was eine Einflussnahme auf die Viskosität des Polymers gar nicht mehr ermöglicht. Aus diesem Grund wurde das das vorbekannte Viskositätsmessverfahren entwickelt, welches wie folgt abläuft: ein Seitenstrom wird vom Polymerstrom abgezweigt und die Viskosität des Seitenstroms wird mittels einer Druckdifferenz über der Blende oder der Kapillare bestimmt, durch welche der Seitenstrom hindurchgeführt wird. Dieses vorbekannte Viskositätsmessverfahren ist aber mit verschiedenen Nachteilen verbunden. Die Viskosität im Seitenstrom ist nicht repräsentativ für den Polymerstrom. Bedingt durch die niedrigen Viskositäten von Polymeren sind Blenden oder Kapillaren mit sehr kleinen Durchmessern erforderlich. Diese Blenden oder Kapillaren können aber speziell bei der Verarbeitung von Polymerrezyklaten zur Verstopfung neigen.

Mit den vorbekannten Viskositätsmessvorrichtungen kann die Viskosität von Polymeren aus obigen Gründen nicht prozesssicher gemessen werden. Ein mittels der vorbekannten Viskositätsmessvorrichtung erhaltener Viskositätsmesswert kann somit nicht als Signal für eine Regelung eines Parameters verwendet werden, der die Viskosität beeinflusst und damit nicht zur Steuerung oder Überwachung der Qualität des Polymers verwendet werden, welches mittels des Verarbeitungsverfahrens verarbeitet wird. Mit anderen Worten ist bedingt durch die mit der vorbekannten Viskositätsmessvorrichtung inhärente Schwankungsbreite des erhaltenen Signals eine Regelung der Qualität des Polymers basierend auf diesem Signal in der Praxis zu unzuverlässig und daher nicht praktikabel.

Für eine Viskositätsmessung mittels einer Blende oder Kapillare ist ein kontinuierlich fliessender fluider Polymerstrom erforderlich. Zudem wird nur die Viskosität in einem kleinen Seitenstrom gemessen, somit ist der erhaltene Viskositätsmesswert nicht repräsentativ für den Polymerstrom. Die am Markt erhältlichen Viskositätsmessgeräte sind zudem sehr teuer, da sie eine zusätzliche Seitenstrompumpe zur Förderung des Seitenstroms benötigen.

Für eine Produktionsanlage zur Herstellung von thermoplastischen Kunststoff wurde daher gemäss der Lehre der EP 3 579 069 A1 ein Verfahren zur Steuerung und/oder Regelung bereitgestellt, welches einen Druckwert in der Produktionsanlage erfasst, einen geschätzten Wert für die Viskosität basierend auf dem erfassten Druckwert und einer Temperaturabhängigkeit eines viskosen Verhaltens des thermoplastischen Kunststoffs und des Volumenstroms bestimmt und einen für das viskose Verhalten des thermoplastischen Kunststoffs indikativen Viskositätswert in Abhängigkeit eines Korrekturfaktors für einen Anlagenzustand bestimmt. Der Anlagenzustand ist durch mindestens einen Produktionsparameter bestimmt. Der Druckwert wird als Druckdifferenz zwischen einem ersten Druck und einem zweiten Druck ermittelt. Die Druckdifferenz wird insbesondere in einer Fluidstrecke ermittelt, wobei der erste Druck vor dem statischen Mischer und der zweite Druck nach dem statischen Mischer gemessen werden. Die Herstellung des thermoplastischen Kunststoffs erfolgt kontinuierlich. Die Messung der Druckdifferenzen kann kontinuierlich und/oder diskret in vorbestimmten Zeitintervallen ablaufen. Da das Verfahren zur Herstellung eines genau spezifizierten Kunststoffs, das heisst von Neuware, verwendet wird, kann die Viskosität durch Verwendung historischer Werte oder der Eingabe einer Sollviskosität zuverlässig geregelt werden. Dieses Verfahren versagt jedoch in Fällen, in welchen Polymere unterschiedlicher, teilweise unbekannter Zusammensetzung verarbeitet werden müssen, insbesondere für die Verarbeitung von Polymerrezyklaten. Ein geschätzter Wert für die Viskosität insbesondere bei Produktwechseln basierend auf historischen Werten kann nur dann zum Einsatz kommen, wenn die Eigenschaften des herzustellenden Kunststoffs aus der Literatur bekannt sind. Für ein Polymerverarbeitungsverfahren eines unbekannten Polymers oder Polymergemisches, welches insbesondere Polymerrezyklat enthält, für welches derartige historische Werte nicht vorliegen, kann jedoch dieses Verfahren nicht zum Einsatz kommen.

Ein Verfahren zur Ermittlung eines Konsistenzindex (k) und eines Potenzgesetzindex (n) einer newtonschen oder nicht-newtonschen Flüssigkeit, die ein Potenzgesetzverhalten aufweist, ist aus dem Dokument US 6 412 337 B1 bekannt. Das zu bestimmende Fluid fliesst in laminarer Strömung durch ein Rohr, in welchem ein erster statischer Mischer und ein zweiter statischer Mischer angeordnet sind, die sich geometrisch voneinander unterscheiden und entsprechend unterschiedliche Druckdifferenzen aufweisen.

Derartige nicht-newtonsche Flüssigkeiten enthalten oftmals hohe Anteile an Feststoffpartikeln in einem Bereich von 0.1 bis 5.0 $\mu$m. Diese Feststoffpartikel können sich an konventionellen Viskosimetern ansammeln oder von Wänden migrieren, was eine häufige Reinigung erforderlich macht. Für Fluide niedriger Viskosität tritt dieses Problem nicht auf, allerdings sind die Druckdifferenzen häufig zu niedrig, um in Messanordnungen, wie beispielsweise gemäss US 4 680 957 A beschrieben, korrekt erfasst zu werden. Für Druckdifferenzen von einer Grössenordnung von 100 Pa wird die in US 6 412 337 B1 beschriebene Lösung mit zwei in einem Rohr in Serie geschalteten statischen Mischern vorgeschlagen. Wenn die Viskosität im gesamten verarbeiteten Prozessstrom gemessen werden soll, so ist es grundsätzlich vorteilhaft, die Druckdifferenz möglichst gering zu halten, wie im Dokument US 6 412 337 B1 offenbart. Höhere Druckdifferenzen führen zu höherem Druckaufbau des Förderorganes wie dem Extruder oder einer Pumpe. Dies benötigt bei der Verarbeitung des gesamten Stoffstroms mehr Energie und erhöht durch den erhöhten Wärmeeintrag das Risiko von thermischer Beschädigung des verarbeiteten Produktes. Es hat sich nun allerdings in der Praxis speziell bei der Verarbeitung von viskosen Polymeren gezeigt, dass die Inlineviskositätsmessung des gesamten Polymerstroms bei tiefen Differenzdrücken sehr ungenau wird. Es hat sich gezeigt, dass die gemessenen Drücke bedingt durch leichte Polymerdurchsatzschwankungen über die Zeit variieren und das Messresultat verfälschen. Die gemessenen Druckschwankungen werden auf geringfügige Durchsatzschwankungen des Förderorganes wie dem Extruder oder der Pumpe sowie einer gewissen Kompressibilität des Polymers zurückgeführt.

Aufgabe der Erfindung

Aufgabe der Erfindung ist es, ein zuverlässiges, das heisst, genaueres, einfacheres und kostengünstiges kontinuierliches Polymerverarbeitungsverfahren, welches ein Inline-Viskositätsmessverfahren enthält, bereitzustellen, um die Qualität eines viskosen Polymers während dessen Verarbeitung in einem kontinuierlichen Polymerverarbeitungsverfahren zuverlässig zu messen. Insbesondere ist es Aufgabe der Erfindung, die Qualität des Polymers durch geeignete Massnahmen im kontinuierlichen Polymerverarbeitungsverfahren direkt zu beeinflussen und zu steuern. Eine weitere Aufgabe der Erfindung besteht darin, ein nachhaltiges Viskositätsmessverfahren bereitzustellen, bei welchem keine Verluste des zu verarbeitenden Polymers entstehen.

Beschreibung der Erfindung

Die Lösung der Aufgabe der Erfindung erfolgt durch ein kontinuierliches Polymerverarbeitungsverfahren gemäss Anspruch 1. Vorteilhafte Verfahrensvarianten sind Gegenstand der abhängigen Ansprüche.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe kontinuierliche Polymerverarbeitungsverfahren. Die Beschreibung eines bestimmten Verfahrens ist nur als beispielhaft anzusehen. In der Beschreibung und den Ansprüchen werden die Begriffe "enthalten", "umfassen", "aufweisen" als "enthalten, aber nicht beschränkt auf" interpretiert.

Unter einem viskosen Polymer wird in dieser Anmeldung ein Polymer verstanden, dessen gemessene Viskosität in der erfindungsgemässen Viskositätsmessvorrichtung unter Prozessbedingungen im Bereich von 50 Pas bis einschliesslich 10 000 Pas liegt.

Unter der Qualität des Polymers wird in dieser Anmeldung eine Kenngrösse verstanden, die den Kettenabbau des Polymers charakterisiert, wenn ein Polymer verarbeitet wird, in welchem der Kettenabbau die Qualität des Polymers verringert. Durch thermische Belastung des Polymers und die Einwirkung von Scherkräften auf das Polymer kann ein Kettenabbau erfolgen, der zu einer reduzierten Viskosität des Polymers führt. Daher korreliert der Kettenabbau mit dem erhaltenen Viskositätsmesswert. Wenn mittels des erfindungsgemässen Inline-Viskositätsmessverfahrens ein zu niedriger Viskositätsmesswert ermittelt wird, kann somit ein durch den Kettenabbau bedingter Verlust an Qualität des Polymers ermittelt werden, was sich in einer reduzierten Qualität des mit dem Polymerverarbeitungsverfahren erhältlichen Verarbeitungsprodukts niederschlagen kann.

Unter einem Viskositätsmesswert kann eine von Temperatur und Durchsatz abhängige Viskosität verstanden werden. Unter einem Viskositätsmesswert kann auch eine intrinsische Viskosität verstanden werden, die vom Durchsatz und der Temperatur unabhängig ist. Unter einem Viskositätsmesswert kann auch ein Viskositätsmesspunkt verstanden werden, der bei einer bestimmten Temperatur und einer bestimmten Scherrate ermittelt wird. Mittels des Viskositätsmesspunkts kann ein Messwert zur Charakterisierung des Fliessverhaltens des Polymers ermittelt werden. Der Messwert kann beispielsweise aus der Gruppe bestehend aus der Schmelzemassenfliessrate (MFR, d.h., melt mass flow ratio), Schmelzemassenflussindex (MFI, d.h., melt mass index), Schmelzevolumenfliessrate (MVR, d.h., melt volume flow ratio) oder Schmelzvolumenflussindex (MVI, d.h., melt volume index) umfassen.

Ein erfindungsgemässes kontinuierliches Polymerverarbeitungsverfahren enthaltend ein Inline-Viskositätsmessverfahren kann auch für feuchtigkeitsempfindliche Polymere, insbesondere Polyester, zum Einsatz kommen. Wenn ein feuchtigkeitsempfindliches Polymer mittels eines Polymerverarbeitungsverfahrens verarbeitet wird, kann Feuchtigkeit zu einem Kettenabbau führen, wobei der Kettenabbau zu einer Reduktion des Viskositätsmesswerts führt.

Erfindungsgemäss wird ein sehr genaues, prozesssicheres, einfaches und kostengünstiges kontinuierliches Polymerverarbeitungsverfahren bereitgestellt, welches ein Inline-Viskositätsmessverfahren enthält, um insbesondere während des kontinuierlichen Polymerverarbeitungsverfahrens einen Viskositätsmesswert eines fluiden Polymerstroms zu ermitteln. Das Inline-Viskositätsmessverfahren zur Messung einer Viskosität eines fluiden Polymerstroms wird in einem geschlossenen Kanal durchgeführt. Der fluide Polymerstrom durchströmt eine im geschlossenen Kanal angeordnete Messstrecke, wobei der geschlossene Kanal eine Längsachse, ein Eintrittsende und ein Austrittsende umfasst. Die Messstrecke erstreckt sich zumindest zwischen dem Eintrittsende und dem Austrittsende, wobei in der Messstrecke zumindest ein Einbauelement angeordnet ist. Ein Eintrittsdruck wird stromaufwärts des Einbauelements von einem Eintrittsdrucksensor gemessen, sodass ein Eintrittsdruckmesswert erhalten wird, wobei ein Austrittsdruck stromabwärts des Einbauelements von einem Austrittsdrucksensor gemessen wird, sodass ein Austrittsdruckmesswert erhalten wird, wobei der Eintrittsdruckmesswert und der Austrittsdruckmesswert mittels eines Wandlers in von einer Rechnereinheit verarbeitbare Messgrössen umgewandelt werden, wobei die Rechnereinheit eine Druckdifferenz zwischen dem Eintrittsdruckmesswert und dem Austrittsdruckmesswert ermittelt.

Eine Regelung der Viskosität unter Verwendung des mittels des Inline-Viskositätsmessverfahrens erhaltenen Viskositätsmesswerts erfolgt mittels eines geschlossenen Regelkreises.

Die Regelung der Viskosität kann durch Zugabe eines Zusatzstoffs zum fluiden Polymerstrom erfolgen, welcher die Viskosität verändert. Als Viskosität werden sowohl prozessabhängige gemessene Viskositäten wie auch prozessunabhängige Viskositätskennzahlen verstanden. Besonders gut eignen sich die prozessunabhängigen Viskositätskennzahlen wie zum Beispiel der IV, MFR, MFI, MVR, MVI als Regelparameter. Der Zusatzstoff kann zumindest ein Element aus der Gruppe bestehend aus einem Additiv und mindestens einem weiteren Polymer höherer Viskosität enthalten. Das Additiv kann ein Element aus der Gruppe bestehend aus einem Kettenverlängerungsadditiv, und einem Additiv, welches Wasser enthält oder Wasser abspalten kann, umfassen.

Mittels des Viskositätsmesswerts kann zumindest ein Parameter geregelt werden, der den Viskositätsmesswert beeinflusst. Mit anderen Worten kann mittels des Parameters der Viskositätsmesswert verändert werden. Der Parameter kann die Zugabe eines Zusatzstoffs zum fluiden Polymerstrom umfassen. Der Parameter kann eine Temperatur des fluiden Polymerstroms umfassen.

Nach einem Ausführungsbeispiel wird mit dem Viskositätsmesswert eine prozessunabhängige Rohstoffkenngrösse ermittelt. Insbesondere kann die prozessunabhängige Rohstoffkenngrösse ein Element aus der Gruppe bestehend aus einer intrinsischen Viskosität (IV), einer Lösungsviskositätskennzahl und einer Schmelzflussrate umfassen.

Eine prozessunabhängige Rohstoffkenngrösse kann einen Aufschluss über die Rohstoffqualität geben. Ein Beispiel für eine Rohstoffkenngrösse ist die Schmelzflussrate (MFR, MFI, MVR, MVI) gemessen gemäss DIN EN ISO 1133, 1133-1, 1133-2. Die Schmelzflussrate ist ein Mass für die Fliessfähigkeit von geschmolzenem Kunststoff und stellt einen typischen Index für die Qualitätskontrolle von Thermoplasten dar.

Eine weitere Rohstoffkenngrösse ist bei Polyestermaterialien die intrinsische Viskosität (IV). Der IV von PET wird zum Beispiel dadurch gemessen, dass das PET in Phenol-1,2-Dichlorobenzol bei 132 °C gelöst wird und die Viskosität der Lösung anschliessend bei 25 °C mit einem Ubbelohde Viscosimeter gemäss ISO-Norm 1628 gemessen und berechnet wird. Eine weitere Rohstoffkenngrösse ist die relative Viskosität (RV) bei Polyamiden. Der RV von Polyamiden wird zum Beispiel dadurch gemessen, dass das Polyamid in 96%iger Schwefelsäure in einer Konzentration von 0.01 g/ml bei 20 °C gelöst wird und die Viskosität der Lösung anschliessend mit einem Ubbelohde Viscosimeter gemäss ASTM D0789-19 gemessen und berechnet wird. Für die vorliegende Beschreibung der Erfindung wird für die vorgenannten Beispiele der Oberbegriff Rohstoffkenngrösse verwendet.

Insbesondere wird das Inline-Viskositätsmessverfahren zur Messung einer Viskosität eines fluiden Polymerstroms in einem geschlossenen Kanal durchgeführt. Der fluide Polymerstrom durchströmt eine im geschlossenen Kanal angeordnete Messstrecke, wobei der geschlossene Kanal eine Längsachse, ein Eintrittsende und ein Austrittsende umfasst. Die Messstrecke erstreckt sich zumindest zwischen dem Eintrittsende und dem Austrittsende, wobei in der Messstrecke zumindest ein Einbauelement angeordnet ist, sodass durch die Messstrecke insbesondere ein statischer Mischer ausgebildet wird. In der Messstrecke kann nach einem Ausführungsbeispiel somit ein statischer Mischer angeordnet sein. Der statische Mischer kann zumindest ein stromteilendes Mischelement enthalten. Das stromteilende Mischelement kann als ein Einbauelement ausgebildet sein. Das Einbauelement kann insbesondere ein erstes Einbauelement und ein zweites Einbauelement umfassen. Der statische Mischer kann zumindest ein erstes Einbauelement und ein zweites Einbauelement enthalten. Ein Eintrittsdruck kann stromaufwärts des Einbauelements von einem Eintrittsdrucksensor gemessen werden, sodass ein Eintrittsdruckmesswert erhalten wird, und wobei ein Austrittsdruck stromabwärts des stromteilenden Mischelements von einem Austrittsdrucksensor gemessen werden kann, sodass ein Austrittsdruckmesswert erhalten wird. Insbesondere kann ein Eintrittsdruck stromaufwärts des ersten Einbauelements und zweiten Einbauelements von einem Eintrittsdrucksensor gemessen werden, sodass ein Eintrittsdruckmesswert erhalten wird, und ein Austrittsdruck kann stromabwärts des ersten Einbauelements und zweiten Einbauelements von einem Austrittsdrucksensor gemessen werden, sodass ein Austrittsdruckmesswert erhalten wird. Der Eintrittsdruckmesswert und der Austrittsdruckmesswert können mittels eines Wandlers in von einer Rechnereinheit verarbeitbare Messgrössen umgewandelt werden. Die Rechnereinheit kann eine Druckdifferenz zwischen dem Eintrittsdruckmesswert und dem Austrittsdruckmesswert ermitteln.

Mittels eines Temperatursensors kann eine Temperatur des fluiden Polymerstroms ermittelt werden, wobei die Temperatur an einer Temperaturmessstelle ermittelt werden kann. Die Temperaturmessstelle wird insbesondere derart gewählt, dass die gemessene Temperatur repräsentativ für die Temperatur des fluiden Polymerstroms im geschlossenen Kanal ist. Der Durchsatz des fluiden Polymerstroms kann über ein Förderorgan oder ein Durchsatzmessgerät ermittelt werden, wobei aus der Druckdifferenz des fluiden Polymerstroms und dem Durchsatz des fluiden Polymerstroms die Viskosität mittels einer Berechnungsvorschrift als Viskositätsmesswert ermittelt werden kann, wobei insbesondere der fluide Polymerstrom kein Seitenstrom mit Rückführung ist. Insbesondere kann mittels eines statischen Mischers eine Mischung des fluiden Polymerstroms erfolgen.

Nach einem Ausführungsbeispiel ist das Einbauelement als zumindest eine Gruppe von Stegelementen ausgebildet. Die zumindest eine Gruppe von Stegelementen kann sich in einer ersten Gruppenebene und einer zweiten Gruppenebene erstrecken, wobei die erste Gruppenebene einen ersten Winkel zur Längsachse des geschlossenen Kanals einschliesst und die zweite Gruppenebene einen zweiten Winkel zur Längsachse des geschlossenen Kanals einschliesst. Die erste Gruppenebene kann sich mit der zweiten Gruppenebene kreuzen. Die negativen Einflüsse von Produktzersetzung bei höheren Druckdifferenzen konnten insbesondere durch die Wahl eines statischen Mischers mit kreuzweise angeordnete Stegelementen gering gehalten werden, da in diesem statischen Mischer die Verweilzeitverteilung gering gehalten werden kann.

Insbesondere, wenn die Zusammensetzung des Polymers nicht bekannt ist, beispielsweise bei Verwendung eines Polymerrezyklats, kann mit dem erfindungsgemässen Inline-Viskositätsmessverfahren zuverlässig ein Viskositätsmesswert in einem kontinuierlichen Polymerverarbeitungsverfahren erhalten werden. Mit anderen Worten wird der gesamte, in einem Polymerverarbeitungsverfahren anfallende fluide Polymerstrom für die Durchführung des erfindungsgemässen Inline-Viskositätsmessverfahrens genutzt. Für die Durchführung des Inline-Viskositätsmessverfahrens muss keinerlei Seitenstrom mit oder ohne Rückführung abgezweigt werden. Mit dem Inline-Viskositätsmessverfahren kann somit keinerlei Abfallmaterial anfallen, sodass mittels des erfindungsgemässen Inline-Viskositätsmessverfahrens eine bestmögliche Ausnutzung der knappen Ressource Polymer gewährleistet werden kann. Überraschenderweise ist somit die Durchführung des erfindungsgemässen Inline-Viskositätsmessverfahrens nachhaltiger als die Verwendung vorbekannter Viskositätsmessverfahren, obwohl die Messung im gesamten, im kontinuierlichen Polymerverarbeitungsverfahren anfallenden Polymerstrom erfolgt. Da insbesondere durch den Einsatz des statischen Mischers kein störender Einfluss der Viskositätsmessvorrichtung auf den fluiden Polymerstrom genommen wird, kann der gesamte fluide Polymerstrom in nachfolgenden Verarbeitungsschritten ohne Ausschuss zu einem Produkt weiterverarbeitet werden, dessen Qualität mittels des Inline-Viskositätsmessverfahrens zudem auf einem konstant hohen Niveau gehalten werden kann.

Als statischer Mischer wird eine Vorrichtung definiert, die zumindest ein Einbauelement enthält, mittels welchem der fluide Polymerstrom durch Bildung und Umlagerung von Schichten durchmischt wird. Der fluide Polymerstrom wird nach einem Ausführungsbeispiel zumindest im Bereich der Messstrecke durch den statischen Mischer geleitet. Die Verwendung des statischen Mischers für den gesamten fluiden Polymerstrom ermöglicht überraschenderweise auch die Qualität des im kontinuierlichen Polymerverarbeitungsverfahren verarbeiteten Polymers zu verbessern. Insbesondere kann eine Polymermischung, beispielsweise ein Polymerrezyklat, verarbeitet werden, was bislang aufgrund der fehlenden Viskositätsinformationen nicht in zufriedenstellend reproduzierbarer Qualität möglich war. Beispielsweise können Additive dem fluiden Polymerstrom aufgrund des mittels des Inline-Viskositätsmessverfahrens erhaltenen Viskositätsmesswerts optimal zudosiert werden und diese Additive unmittelbar über den statischen Mischer mit dem fluiden Polymerstrom vermischt werden. Mittels des statischen Mischers kann somit ein homogener fluider Polymerstrom erhalten werden. Der homogene fluide Polymerstrom kann einen in Bezug auf den Querschnitt des geschlossenen Kanals konstanten Viskositätsmesswert aufweisen. Mit anderen Worten ist durch die mittels des statischen Mischers erhältliche Homogenität des fluiden Polymerstroms an jeder Stelle des Querschnitts des geschlossenen Kanals mit Ausnahme von Wandbereichen derselbe Viskositätsmesswert erhältlich. Mit dem konstanten Viskositätsmesswert ist somit eine Basis für ein besonders zuverlässiges Messresultat geschaffen. Dieser überraschende Effekt kann insbesondere dann erzielt werden, wenn sich der statische Mischer im fluiden Polymerstrom befindet, der im kontinuierlichen Polymerverarbeitungsverfahren für die Herstellung des Verarbeitungsprodukts verwendet wird.

Mit einer vorbekannten Viskositätsmessvorrichtung kann ein derartiger Effekt nicht erzielt werden, da keine Mischung des fluiden Polymerstroms erfolgt, daher wurde die vorbekannte Viskositätsmessvorrichtung, wie beispielsweise in Dokument EP 3 579 069 A1 beschrieben, auch nur für die Herstellung von neuwertigem Polycarbonat verwendet. Der fluide Polymerstrom kann für das erfindungsgemässe Inline-Viskositätsmessverfahren eine Polymerschmelze, ein nur teilpolymerisiertes Polymer, ein Polymer in Lösung oder eine Kunststoffschmelze, welche insbesondere ein Gemisch unterschiedlicher Polymere enthalten kann, umfassen. Der fluide Polymerstrom kann insbesondere ein Polymerrezyklat enthalten.

Nach diesem Ausführungsbeispiel wird die Druckdifferenz über den statischen Mischer gemessen. Mit dem zusätzlich ermittelten Durchsatz und der Temperatur wird der Viskositätsmesswert mittels der Berechnungsvorschrift ermittelt. Mittels des Viskositätsmesswerts können prozessunabhängige Rohstoffkenngrössen bestimmt werden.

Die Berechnungsvorschrift für den Viskositätsmesswert kann beispielsweise wie folgt lauten: Der Viskositätsmesswert entspricht der Druckdifferenz mal der Querschnittsfläche des statischen Mischers bezogen auf den Durchsatz und die Länge des statischen Mischers. Mit Durchsatz ist der pro Zeiteinheit durch den geschlossenen Kanal fliessende fluide Polymerstrom gemeint. Der fluide Polymerstrom kann als Massenstrom in [kg/s] oder als Volumenstrom in [$m^3$/s] ermittelt werden. Der geschlossene Kanal ist durch seinen Innendurchmesser und die Messstrecke charakterisiert. Die Messstrecke kann insbesondere der Kanallänge entsprechen. Aus der ermittelten Druckdifferenz, der Temperatur des fluiden Polymerstroms und dem Durchsatz des fluiden Polymerstroms wird der Viskositätsmesswert mittels einer Berechnungsvorschrift ermittelt.

Der Viskositätsmesswert kann insbesondere einen Messwert aus der Gruppe bestehend aus einer Viskosität und einer intrinsischen Viskosität umfassen. Insbesondere kann mittels des erfindungsgemässen Inline-Viskositätsmessverfahrens eine intrinsische Viskosität ermittelt werden. Der Viskositätsmesswert kann zur Ermittlung eines Signals verwendet werden, welches mit dem Viskositätsmesswert korreliert.

Der Viskositätsmesswert für einen bestimmten statischen Mischer kann unter Einführung einer Mischerkennzahl KM, einer Konstante, wie folgt ermittelt werden:

$$\text{Viskositätsmesswert} = \Delta p \times (d_M)^2 / (KM \times v \times LM)$$

wobei $\Delta p$ die Druckdifferenz, $d_M$ den Innendurchmesser des statischen Mischers, KM die Kennzahl des statischen Mischers, v den Durchsatz und LM die Mischerlänge bezeichnen.

Das Förderorgan kann zumindest ein Förderorgan aus der Gruppe bestehend aus einer Schmelzepumpe und einem Extruder umfassen. Nach einem Ausführungsbeispiel wird der Durchsatz über eine Drehzahl einer Schmelzepumpe ermittelt. Nach einem Ausführungsbeispiel befindet sich zwischen einem Austritt der Schmelzepumpe und dem Eintrittsende des geschlossenen Kanals ein Abstand, wobei der Abstand maximal dem fünffachen des Innendurchmessers des geschlossenen Kanals entspricht.

Da der gesamte fluide Polymerstrom über den statischen Mischer geleitet wird, kann sichergestellt werden, dass der erhaltene Viskositätsmesswert repräsentativ für den gesamten fluiden Polymerstrom ist. Da der gesamte fluide Polymerstrom über den statischen Mischer geleitet wird, kann ein statischer Mischer beliebiger Grösse verwendet werden. Der statische Mischer kann mindestens ein erstes Einbauelement und ein zweites Einbauelement umfassen, wobei das erste Einbauelement einen Abstand von einer Kanalwand des geschlossenen Kanals oder dem zumindest einem zweiten Einbauelement derart ausgebildet ist, dass ein Spalt zwischen dem ersten Einbauelement und dem zweiten Einbauelement oder dem ersten oder zweiten Einbauelement und der Kanalwand ausgebildet ist, sodass eine Blockade in der Messstrecke durch Verstopfung verhindert werden kann. Der statische Mischer kann insbesondere an den Einsatz von Polymeren mit Füllstoffen angepasst werden. Der statische Mischer kann auch an die Verwendung von Polymerrezyklat angepasst sein. Es hat sich gezeigt, dass das erfindungsgemässe Inline-Viskositätsmessverfahren, welches den statischen Mischer enthält, sehr stabil ist und eine ideale Basis bildet, um die Qualität des Polymers zu ermitteln. Die Qualität des Polymers kann beispielsweise durch Zugabe von Additiven angepasst werden.

Nach einem Ausführungsbeispiel ist das Einbauelement, als zumindest ein Stegelement ausgebildet, wobei das Stegelement mit einer Stegelementlänge LS in den geschlossenen Kanal hineinragt, die mindestens 25% eines Durchmessers DS des geschlossenen Kanals beträgt.

Das Einbauelement ist als zumindest eine Gruppe von Stegelementen ausgebildet. Die zumindest eine Gruppe von Stegelementen erstreckt sich in einer ersten Gruppenebene und einer zweiten Gruppenebene, wobei die erste Gruppenebene einen ersten Winkel zur Längsachse des geschlossenen Kanals einschliesst und die zweite Gruppenebene einen zweiten Winkel zur Längsachse des geschlossenen Kanals einschliesst. Die die erste Gruppenebene kreuzt sich mit der zweiten Gruppenebene. Insbesondere kann zumindest einer der ersten Winkel und der zweiten Winkel gemessen in Bezug auf die Längsachse einen Wert von ungleich 90 Grad aufweisen. Die erste Gruppenebene und die zweite Gruppenebene enthalten beispielsweise mindestens je ein Stegelement. Nach einem Ausführungsbeispiel enthält das Einbauelement zumindest eine Schar sich kreuzender Stegelemente. Die Schar enthält mindestens zwei Gruppen von im gleichen Winkel zur Durchströmungsrichtung angeordneten Stegelementen. Jede der zumindest zwei Gruppen kann einen Winkel ungleich 90 Grad zur Strömungsrichtung aufweisen. Nach einem Ausführungsbeispiel kreuzen sich die Stegelemente der zumindest zwei Gruppen. Nach einem Ausführungsbeispiel ist eine Mehrzahl von Gruppen von Stegelementen in der Messstrecke hintereinander angeordnet. Insbesondere kann mindestens ein Teil der Stegelemente derart mit dem geschlossenen Kanal verbunden sein, dass zumindest ein Teil der Stegelementenden nicht mit dem geschlossenen Kanal verbunden ist. Mit anderen Worten kann zumindest ein Teil der Stegelemente zumindest ein Stegelementende aufweisen, welches nicht mit einer Innenwand des geschlossenen Kanals verbunden ist.

Es hat sich gezeigt, dass der statische Mischer, insbesondere in einer Ausführungsform, welche eine Gruppe von Stegelementen in einer ersten Gruppenebene und einer zweiten Gruppenebene, wobei die erste Gruppenebene einen ersten Winkel zur Längsachse des geschlossenen Kanals einschliesst und die zweite Gruppenebene einen zweiten Winkel zur Längsachse des geschlossenen Kanals einschliesst, umfasst, beispielsweise mit sich kreuzenden Stegelementen, vorteilhafterweise derart ausgestaltet ist, dass die Messung mit einer Scherrate erfolgt, die im Bereich von 20 [1/s] bis einschliesslich 500 [1/s] liegt. Mit anderen Worten wird für die Messung eine Scherrate im Bereich von 20 bis einschliesslich 500 [1/s] erzeugt, wenn der fluide Polymerstrom den statischen Mischer durchströmt.

In diesem Bereich konnte über den statischen Mischer eine reproduzierbare und über eine Zeitdauer sehr stabile Messung erreicht werden. Es hat sich gezeigt, dass bei Scherraten unter 20 [1/s] Ablagerungen im statischen Mischer entstehen und sich das Polymer, insbesondere Polyester oder ein Polymerrezyklat und ganz besonders Polyester mit Rezyklatanteilen, zersetzt. Bei der Zersetzung fallen Zersetzungsprodukte an, welche in vorbekannten Herstellungsanlagen für Polycarbonat Ablagerungen ausbilden. Derartige Ablagerungen führen zu Fehlern in der Viskositätsmessung, da ein Teil der Druckdifferenz nicht der Viskosität des Polymers zugeordnet werden kann, sondern durch die von den Ablagerungen bedingte Kanalverengung bedingt ist. Diese Ablagerungen können erfindungsgemäss bei Verwendung von Polymerrezyklaten überraschenderweise vermieden werden. Einerseits sind die Viskositäten bei Polymerrezyklaten bedingt durch einen teilweisen Polymerkettenabbau sehr tief. Damit reproduzierbare und genaue Viskositätsmesswerte erzielt werden können, sind statische Mischer mit relativ hohen Strömungswiderständen und Druckdifferenzen und entsprechend vielen relativ dicht gepackten Einbauten erforderlich. Polymerrezyklate können auch Fremdpartikel und/oder Feststoffe enthalten, die bei komplexen dicht gepackten Einbauelementen zu Ablagerungen oder Verblockung führen, was sich in ungenauen Messresultaten niederschlägt. Erstaunlicherweise hat sich gezeigt, dass statische Mischer, welche Einbauelemente aufweisen, die als eine Gruppe von Stegelementen ausgebildet sind, wobei sich die zumindest eine Gruppe von Stegelementen sich in einer ersten Gruppenebene und einer zweiten Gruppenebene erstreckt, wobei die erste Gruppenebene einen ersten Winkel zur Längsachse des geschlossenen Kanals einschliesst und die zweite Gruppenebene einen zweiten Winkel zur Längsachse des geschlossenen Kanals einschliesst, trotz der relativ dichten Packung von Stegelementen zu sehr guten Messresultaten geführt hat. In Versuchen konnten auch nach längeren Betriebszeiten keinerlei Ablagerungen und/oder Messfehler festgestellt werden. Besonders bewährt haben sich Einbauelemente, bei denen sich mindestens zwei Gruppen von Stegelementen, insbesondere von parallel angeordneten Stegelementen in einem Winkel von 25 bis einschliesslich 60 Grad kreuzen. Eine Gruppe von Stegelementen kann beispielsweise 4 bis einschliesslich 12 nebeneinander angeordnete Stegelemente umfassen.

In Versuchsreihen mit Polyestern mit Rezyklatanteilen ergaben sich bei Scherraten unter 20 [1/s] zeitliche Schwankungen der Druckdifferenz. Diese zeitlichen Schwankungen sind einem ungleichmässigen Durchströmen des statischen Mischers und sehr kleinen gemessenen Druckdifferenzen geschuldet. Zeitliche Schwankungen der Druckdifferenz sind besonders störend, wenn die Viskosität und speziell die intrinsische Viskosität geregelt wird, zum Beispiel durch Zugabe eines Additivs. Bei Scherraten grösser als 500 [1/s] wird der vom fluiden Polymerstrom durchströmte Kanalquerschnitt des geschlossenen Kanals, in welchem der statische Mischer angeordnet ist, im Verhältnis zum Kanalquerschnitt der Zu- und Ableitung der Messstrecke sehr klein. Dies kann speziell beim Einsatz von Polyester mit Rezyklatanteilen zu Verstopfungen führen. Im Übergangsbereich von Zu- und Ableitung zur Messstrecke, die den statischen Mischer enthält, kann ein konischer Abschnitt ausgebildet sein. Im konischen Abschnitt können Ablagerungen auftreten, die sich negativ auf das Verweilzeitverhalten auswirken.

Nach einem Ausführungsbeispiel weist der geschlossene Kanal einen Innendurchmesser auf, wobei zumindest eines der Stegelemente eine Stegelementlänge LS aufweist, die grösser als der Innendurchmesser ist. Insbesondere kann nach einem Ausführungsbeispiel mindestens ein Teil der Stegelemente derart mit dem geschlossenen Kanal verbunden sein, dass zumindest ein Teil der Stegelemente, insbesondere Endbereiche der Stegelemente, nicht mit dem geschlossenen Kanal verbunden ist.

Nach einem Ausführungsbeispiel wird der Viskositätsmesswert zur Ermittlung eines Signals verwendet, welches mit dem Viskositätsmesswert korreliert. Insbesondere kann mittels eines Regelungsverfahrens mit dem Signal als Eingangsgrösse ein Parameter geregelt werden, welcher die Viskosität des fluiden Polymerstroms verändert. Der Parameter kann insbesondere ein Kettenverlängerungsadditiv umfassen. Der Parameter kann insbesondere ein Additiv umfassen, welches Wasser enthält oder Wasser abspalten kann. Nach einem Ausführungsbeispiel ist der Parameter eine Schmelzetemperatur, wenn der fluide Polymerstrom als Polymerschmelze ausgebildet ist.

Der Viskositätsmesswert kann nach einem Ausführungsbeispiel als ein prozessunabhängiger Viskositätsmesswert ausgebildet sein. Mit dem Begriff eines prozessunabhängigen Viskositätsmesswerts ist insbesondere gemeint, dass der Viskositätsmesswert unabhängig vom Durchsatz und von der Temperatur des fluiden Polymerstroms ist. Mittels des prozessunabhängigen Viskositätsmesswerts kann ein prozessunabhängiges Signal für die Regelung des Polymerverarbeitungsverfahrens generiert werden. Beispielsweise können mittels eines prozessunabhängigen Viskositätsmesswerts Änderungen des Viskositätsmesswertes, die auf eine Änderung der Temperatur oder des Durchsatzes des fluiden Polymerstroms zurückgehen, herausgefiltert werden. Der prozessunabhängige Viskositätsmesswert erfüllt nach diesem Ausführungsbeispiel eine Filterfunktion für unerwünschte Parameter, die nicht in die Regelung einfliessen sollen. Ohne diese Filterfunktion können Viskositätsmesswerte auch Einflüsse enthalten, die auf eine Änderung der Temperatur oder des Durchsatzes des fluiden Polymerstroms enthalten. Aus derartigen Viskositätsmesswerten kann ein fehlerhaftes Signal ermittelt werden, sodass mittels des Regelungsverfahrens mit dem fehlerhaften Signal als Eingangsgrösse ein Parameter geregelt würde, welcher den Viskositätsmesswert des fluiden Polymerstroms in unzulässiger Weise verändern würde.

Nach einem Ausführungsbeispiel wird mittels eines Temperatursensors die Temperatur des fluiden Polymerstroms ermittelt, wobei die Temperatur an einer Temperaturmessstelle ermittelt werden kann. Die Temperaturmessstelle kann insbesondere derart gewählt werden, dass die gemessene Temperatur repräsentativ für die Temperatur des fluiden Polymerstroms im geschlossenen Kanal ist.

Das Polymer kann beispielsweise einen Polyester umfassen, insbesondere einen Polyester, der einen Anteil an Polyesterrezyklat enthält. Das Polymer kann beispielsweise ein Polyamid umfassen, insbesondere ein Polyamid, das einen Anteil an Polyamidrezyklat enthält.

Kurzbeschreibung der Zeichnungen

Nachfolgend wird die erfindungsgemässe Inline-Viskositätsmessvorrichtung anhand einiger Ausführungsbeispiele dargestellt. Es zeigen

Fig. 1a eine Ansicht einer Inline-Viskositätsmessvorrichtung nach einem ersten Ausführungsbeispiel,

Fig. 1b eine Schnittansicht des geschlossenen Kanals gemäss Fig. 1a,

Fig. 2a eine Ansicht einer Inline-Viskositätsmessvorrichtung nach einem zweiten Ausführungsbeispiel,

Fig. 2b eine Schnittansicht des geschlossenen Kanals gemäss Fig. 2a,

Fig. 3a eine Ansicht einer Inline-Viskositätsmessvorrichtung nach einem dritten Ausführungsbeispiel,

Fig. 3b eine Schnittansicht des geschlossenen Kanals gemäss Fig. 3a,

Fig. 4a eine Ansicht einer Inline-Viskositätsmessvorrichtung nach einem vierten Ausführungsbeispiel,

Fig. 4b eine Schnittansicht des geschlossenen Kanals gemäss Fig. 4a,

Fig. 5a eine Ansicht einer Inline-Viskositätsmessvorrichtung nach einem fünften Ausführungsbeispiel,

Fig. 5b eine Schnittansicht des geschlossenen Kanals gemäss Fig. 5a,

Fig. 6a eine Ansicht einer Inline-Viskositätsmessvorrichtung nach einem sechsten Ausführungsbeispiel,

Fig. 6b eine Schnittansicht des geschlossenen Kanals gemäss Fig. 6a,

Fig. 7a eine Ansicht einer Inline-Viskositätsmessvorrichtung nach einem siebenten Ausführungsbeispiel,

Fig. 7b eine Schnittansicht des geschlossenen Kanals gemäss Fig. 7a,

Fig. 8a eine Ansicht einer Inline-Viskositätsmessvorrichtung nach einem achten Ausführungsbeispiel,

Fig. 8b eine Schnittansicht des geschlossenen Kanals gemäss Fig. 8a,

Fig. 9a eine Ansicht einer Inline-Viskositätsmessvorrichtung nach einem achten Ausführungsbeispiel,

Fig. 9b eine Schnittansicht des geschlossenen Kanals gemäss Fig. 9a,

Fig. 10 ein Ausführungsbeispiel eines vorbekannten Viskositätsmessverfahrens,

Fig. 11 eine Verwendung der Inline-Viskositätsmessvorrichtung nach einem der Ausführungsbeispiele für ein Inline-Viskositätsmessverfahren für ein kontinuierliches Polymerverarbeitungsverfahren.

<u>Detaillierte Beschreibung der Zeichnungen</u>

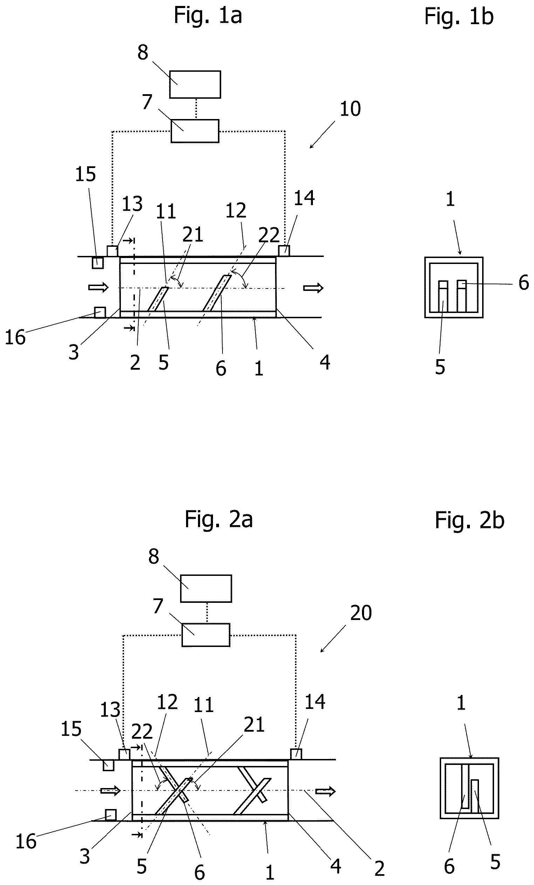

Fig. 1a zeigt eine Inline-Viskositätsmessvorrichtung 10 zur Durchführung eines Inline-Viskositätsmessverfahrens nach einem der Ausführungsbeispiele der Erfindung. Die Inline-Viskositätsmessvorrichtung 10 zur Ermittlung eines Viskositätsmesswerts eines fluiden Polymerstroms enthält eine in einem geschlossenen Kanal 1 angeordnete Messstrecke. Die Messstrecke wird vom fluiden Polymerstrom durchströmt. Die Messstrecke ist somit als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5,6 angeordnet ist. Durch die Messstrecke wird ein statischer Mischer ausgebildet. Stromaufwärts des Einbauelements 5,6, beispielsweise am Eintrittsende 3, ist ein Eintrittsdrucksensor 13 zur Messung eines Eintrittsdruckmesswerts angeordnet. Stromabwärts des Einbauelements 5, 6, beispielsweise am Austrittsende 4, ist ein Austrittsdrucksensor 14 zur Messung eines Austrittsdruckmesswerts angeordnet. Alternativ kann am Austrittsende ein Umgebungsdruck ermittelt werden. Die Vorrichtung 10 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist.

Mittels eines Temperatursensors wird die Temperatur des fluiden Polymerstroms im geschlossenen Kanal 1 ermittelt. Zudem wird der Durchsatz des fluiden Polymerstroms durch den geschlossenen Kanal 1 ermittelt. Die Inline-Viskositätsmessvorrichtung 10 enthält gemäss des vorliegenden Ausführungsbeispiels beispielsweise einen Durchsatzsensor 15 und einen Temperatursensor 16, wobei mittels des Durchsatzsensors 15 ein Durchsatz des durch den geschlossenen Kanal 1 strömenden fluiden Polymerstroms ermittelbar ist. Mittels des Temperatursensors 16 ist eine Temperatur des durch den geschlossenen Kanal 1 strömenden fluiden Polymerstroms ermittelbar, wobei mittels der Rechnereinheit 8 aus der Druckdifferenz, der Temperatur des fluiden Polymerstroms und dem Durchsatz des fluiden Polymerstroms eine Viskosität mittels einer Berechnungsvorschrift ermittelbar ist. Der fluide Polymerstrom ist kein Seitenstrom mit Rückführung, sodass mittels des statischen Mischers eine Mischung des fluiden Polymerstroms erfolgt. Ein Spalt kann zwischen dem Einbauelement und einer Innenwand des geschlossenen Kanals ausgebildet sein.

Gemäss des vorliegenden Ausführungsbeispiels sind ein erstes Einbauelement 5 und ein zweites Einbauelement 6 vorgesehen. Insbesondere ist jedes der ersten und zweiten Einbauelemente 5, 6 als zumindest eine Gruppe von Stegelementen ausgebildet. Die Stegelemente des ersten Einbauelements 5 erstrecken sich in einer ersten Gruppenebene 11. Die Stegelemente des zweiten Einbauelements 6 erstrecken sich einer zweiten Gruppenebene 12. Die erste Gruppenebene 11 schliesst einen ersten Winkel 21 mit der Längsachse des geschlossenen Kanals ein. Die zweite Gruppenebene 12 schliesst einen zweiten Winkel 22 mit der Längsachse 2 des geschlossenen Kanals 1 ein. Der erste Winkel 21 kann mit dem zweiten Winkel 22 übereinstimmen. Gemäss eines nicht dargestellten Ausführungsbeispiels kann sich der erste Winkel 21 vom zweiten Winkel 22 unterscheiden.

Die Stegelemente des ersten Einbauelements 5 und die Stegelemente des zweiten Einbauelements 6 erstrecken sich von der Innenwand des geschlossenen Kanals 1 in den Innenraum des geschlossenen Kanals 1. Gemäss des vorliegenden Ausführungsbeispiels weisen die Stegelemente des ersten Einbauelements 5 eine sich von den Stegelementen des zweiten Einbauelements 6 unterscheidende Länge auf. Gemäss des vorliegenden, exemplarischen Ausführungsbeispiels sind die Stegelemente des zweiten Einbauelements 6 zumindest teilweise länger als die Stegelemente des ersten Einbauelements 5. In der Darstellung sind die beiden Stegelemente des zweiten Einbauelements 6 länger als die beiden Stegelemente des ersten Einbauelements 5. Gemäss eines nicht dargestellten Ausführungsbeispiels sind die Stegelemente des zweiten Einbauelements 6 zumindest teilweise kürzer als die Stegelemente des ersten Einbauelements 5.

Selbstverständlich kann zumindest eines der ersten oder zweiten Einbauelemente 5, 6 mehr als zwei Stegelemente enthalten, beispielsweise drei, vier, fünf, sechs, sieben, acht Stegelemente.

Selbstverständlich kann auch nur ein einziges Einbauelement vorgesehen sein, entweder ein erstes Einbauelement 5 oder ein zweites Einbauelement 6 oder ein Einbauelement, welches von der Innenwand bis zur gegenüberliegenden Innenwand erstreckt, was in Fig. 1a nicht zeichnerisch dargestellt ist.

Fig. 1b zeigt eine Schnittansicht des geschlossenen Kanals 1 gemäss Fig. 1a, der im Bereich des Eintrittsendes 3 gelegt worden ist, wobei die Schnittebene in Fig. 1a mit einer strichpunktierten Linie und Pfeilen dargestellt ist. In der Schnittansicht ist das erste Einbauelement 5 sichtbar. Das erste Einbauelement 5 ist aus zwei Stegelementen ausgebildet. Die Stegelemente des ersten Einbauelements 5 haben Mittenachsen, die in der ersten Gruppenebene 11 liegen. Das zweite Einbauelement 6 ist dahinter liegend angeordnet, daher in dieser Schnittansicht teilweise durch das erste Einbauelement 5 verdeckt. Die Stegelemente des zweiten Einbauelements 6 haben Mittenachsen, die in der zweiten Gruppenebene 12 liegen.

Gemäss des in Fig. 1a und Fig. 1b dargestellten ersten Ausführungsbeispiels verläuft die erste Gruppenebene 11 im Wesentlichen parallel zur zweiten Gruppenebene 12. Mit anderen Worten sind die ersten Winkel 21 und die zweiten Winkel 22 gleich, wenn der geschlossene Kanal 1 krümmungsfrei ausgebildet ist. Mit anderen Worten bildet die Längsachse 2 des geschlossenen Kanals 1 eine Gerade aus.

Fig. 2a zeigt eine Inline-Viskositätsmessvorrichtung 20 gemäss eines zweiten Ausführungsbeispiels der Erfindung. Für gleichwirkende Bauelemente werden dieselben Bezugszeichen wie im ersten Ausführungsbeispiel verwendet. Die Inline-Viskositätsmessvorrichtung 20 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5,6 angeordnet ist. Durch die Messstrecke wird ein statischer Mischer ausgebildet. Gemäss des vorliegenden Ausführungsbeispiels sind zwei Anordnungen von ersten und zweiten Einbauelementen 5, 6 hintereinander angeordnet.

Am Eintrittsende 3 ist ein Eintrittsdrucksensor 13 zur Messung eines Eintrittsdruckmesswerts angeordnet. Am Austrittsende 4 ist ein Austrittsdrucksensor 14 zur Messung eines Austrittsdruckmesswerts angeordnet. Alternativ kann am Austrittsende ein Umgebungsdruck ermittelt werden. Die Inline-Viskositätsmessvorrichtung 20 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Vorrichtung 20 enthält gemäss des vorliegenden Ausführungsbeispiels einen optionalen Durchsatzsensor 15 und einen optionalen Temperatursensor 16, wobei mittels des Durchsatzsensors 15 ein Durchsatz des durch den geschlossenen Kanal 1 strömenden fluiden Polymerstroms ermittelbar ist. Mittels des Temperatursensors 16 ist eine Temperatur des durch den geschlossenen Kanal 1 strömenden fluiden Polymerstroms ermittelbar, wobei mittels der Rechnereinheit 8 aus der Druckdifferenz, der Temperatur des fluiden Polymerstroms und dem Durchsatz des fluiden Polymerstroms mittels einer Berechnungsvorschrift ein Viskositätsmesswert ermittelbar ist. Der fluide Polymerstrom ist kein Seitenstrom mit Rückführung, sodass mittels des statischen Mischers eine Mischung des fluiden Polymerstroms erfolgt. Jedes der ersten und zweiten Einbauelemente 5, 6 ist gemäss dieses Ausführungsbeispiels als zumindest eine Gruppe von Stegelementen ausgebildet. Die Stegelemente, welche das erste Einbauelement 5 ausbilden, erstrecken sich in einer ersten Gruppenebene 11. Die Stegelemente, welche das zweite Einbauelement 6 ausbilden, erstrecken sich einer zweiten Gruppenebene 12. Die erste Gruppenebene 11 schliesst einen ersten Winkel 21 mit der Längsachse des geschlossenen Kanals 1 ein. Die zweite Gruppenebene 12 schliesst einen zweiten Winkel 22 mit der Längsachse 2 des geschlossenen Kanals 1 ein. Gemäss des vorliegenden Ausführungsbeispiels kreuzt sich die erste Gruppenebene 11 mit der zweiten Gruppenebene 12.

Das erste Einbauelement 5 besteht gemäss dieses Ausführungsbeispiels aus einem einzigen Stegelement. Das Stegelement des ersten Einbauelements 5 hat eine Mittenachse, die in der ersten Gruppenebene 11 liegt. Das zweite Einbauelement 6 ist dahinter liegend angeordnet, daher in dieser Schnittansicht teilweise durch das erste Einbauelement 5 verdeckt. Das Stegelement des zweiten Einbauelements 6 hat eine Mittenachse, die in der zweiten Gruppenebene 12 liegt. Die erste Gruppenebene 11 kreuzt sich mit der zweiten Gruppenebene 12. Mit anderen Worten kreuzen sich die ersten und zweiten Einbauelemente 5, 6. Die ersten und zweiten Einbauelemente 5, 6 haben Stegelemente, die nur mit einem einzigen Ende mit der Innenwand des geschlossenen Kanals 1 verbunden sind. Das gegenüberliegende Ende der Stegelemente ist insbesondere in einem Abstand zur gegenüberliegenden Innenwand des geschlossenen Kanals 1 angeordnet, der grösser ist als der Wandabstand, in welchem ein Wandeffekt auftritt. Das gegenüberliegende Ende wird nachfolgend als das freie Ende bezeichnet. Insbesondere kann der Abstand des freien Endes zumindest eines der Stegelemente mindestens ein Zehntel des Innendurchmessers des geschlossenen Kanals betragen. Durch den Abstand kann ein Spalt ausgebildet sein. Der Spalt weist insbesondere eine Spaltbreite auf, die mindestens 10% eines Durchmessers DS des geschlossenen Kanals beträgt. Das Stegelement des ersten Einbauelements 5 kann sich in seiner Länge vom Stegelement des zweiten Einbauelements 6 unterscheiden.

In Fig. 2a ist eine erste Anordnung und eine zweite Anordnung dargestellt. Die erste Anordnung besteht aus den ersten und zweiten Einbauelementen 5, 6. Die zweite Anordnung besteht gemäss dieses Ausführungsbeispiels ebenfalls aus gleichartigen ersten und zweiten Einbauelementen 5, 6, die in Fig. 2a nicht bezeichnet sind und in Fig. 2b nicht sichtbar sind, da sie von den ersten und zweiten Einbauelementen 5, 6 der stromaufwärts liegenden ersten Anordnung verdeckt sind.

Fig. 2b zeigt eine Schnittansicht des geschlossenen Kanals 1 gemäss Fig. 2a, der im Bereich des Eintrittsendes 3 gelegt worden ist, wobei die Schnittebene mit einer strichpunktierten Linie und Pfeilen dargestellt ist. In der Schnittansicht sind das erste Einbauelement 5 und das zweite Einbauelement 6 der ersten Anordnung sichtbar.

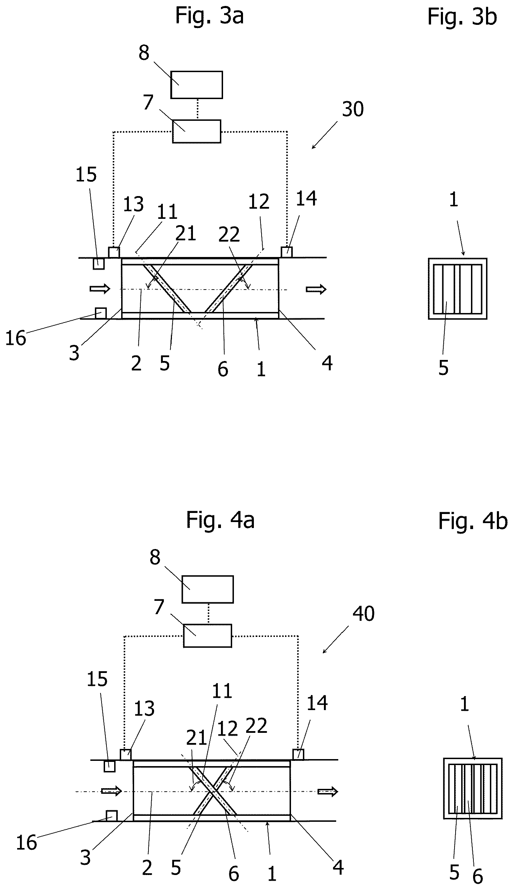

Fig. 3a zeigt eine Inline-Viskositätsmessvorrichtung 30 gemäss eines dritten Ausführungsbeispiels der Erfindung. Die Inline-Viskositätsmessvorrichtung 30 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5, 6 angeordnet ist. Durch die Messstrecke wird ein statischer Mischer ausgebildet. Am Eintrittsende 3 ist ein Eintrittsdrucksensor 13 zur Messung eines Eintrittsdruckmesswerts angeordnet. Am Austrittsende 4 ist ein Austrittsdrucksensor 14 zur Messung eines Austrittsdruckmesswerts angeordnet. Alternativ kann am Austrittsende ein Umgebungsdruck ermittelt werden. Die Inline-Viskositätsmessvorrichtung 30 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Vorrichtung 30 enthält gemäss des vorliegenden Ausführungsbeispiels zusätzlich einen optionalen Durchsatzsensor 15 und einen optionalen Temperatursensor 16, wobei mittels des Durchsatzsensors 15 ein Durchsatz des durch den geschlossenen Kanal 1 strömenden fluiden Polymerstroms ermittelbar ist. Mittels des Temperatursensors 16 ist eine Temperatur des durch den geschlossenen Kanal 1 strömenden fluiden Polymerstroms ermittelbar, wobei mittels der Rechnereinheit 8 aus der Druckdifferenz, der Temperatur des fluiden Polymerstroms und dem Durchsatz des fluiden Polymerstroms ein Viskositätsmesswert ermittelbar ist. Der fluide Polymerstrom ist kein Seitenstrom mit Rückführung, sodass mittels des statischen Mischers eine Mischung des fluiden Polymerstroms erfolgt. Ein Spalt kann zwischen zumindest einem der ersten und zweiten Einbauelemente 5, 6 und einer Innenwand des geschlossenen Kanals ausgebildet sein.

Gemäss des vorliegenden Ausführungsbeispiels sind ein erstes Einbauelement 5 und ein zweites Einbauelement 6 vorgesehen. Jedes der ersten und zweiten Einbauelemente 5, 6 kann als zumindest eine Gruppe von Stegelementen ausgebildet sein, die sich in einer ersten Gruppenebene 11 und einer zweiten Gruppenebene 12 erstrecken. Die erste Gruppenebene 11 schliesst einen ersten Winkel 21 mit der Längsachse des geschlossenen Kanals ein und die zweite Gruppenebene 12 schliesst einen zweiten Winkel 22 mit der Längsachse 2 des geschlossenen Kanals 1 ein.

Fig. 3b zeigt eine Schnittansicht des geschlossenen Kanals 1 gemäss Fig. 3a, der im Bereich des Eintrittsendes 3 gelegt worden ist. In der Schnittansicht ist das erste Einbauelement 5 sichtbar. Das zweite Einbauelement 6 ist dahinter liegend angeordnet, daher in dieser Schnittansicht durch das erste Einbauelement 5 verdeckt. Das erste Einbauelement 5 besteht gemäss des vorliegenden Ausführungsbeispiels aus zwei Stegelementen.

Fig. 4a zeigt eine Inline-Viskositätsmessvorrichtung 40 gemäss eines vierten Ausführungsbeispiels der Erfindung. Für gleichwirkende Bauelemente werden dieselben Bezugszeichen wie im ersten Ausführungsbeispiel verwendet. Die Inline-Viskositätsmessvorrichtung 40 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5,6 angeordnet ist. Am Eintrittsende 3 ist ein Eintrittsdrucksensor 13 zur Messung eines Eintrittsdruckmesswerts angeordnet. Am Austrittsende 4 ist ein Austrittsdrucksensor 14 zur Messung eines Austrittsdruckmesswerts angeordnet. Alternativ kann am Austrittsende ein Umgebungsdruck ermittelt werden. Die Vorrichtung 40 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Vorrichtung 40 enthält gemäss des vorliegenden Ausführungsbeispiels zusätzlich einen optionalen Durchsatzsensor 15 und einen optionalen Temperatursensor 16, wobei mittels des Durchsatzsensors 15 ein Durchsatz des durch den geschlossenen Kanal 1 strömenden fluiden Polymerstroms ermittelbar ist.

Mittels des Temperatursensors 16 ist eine Temperatur des durch den geschlossenen Kanal 1 strömenden fluiden Polymerstroms ermittelbar, wobei mittels der Rechnereinheit 8 aus der Druckdifferenz, der Temperatur des fluiden Polymerstroms und dem Durchsatz ein Viskositätsmesswert mittels einer Berechnungsvorschrift ermittelbar ist. Der fluide Polymerstrom ist kein Seitenstrom mit Rückführung, sodass mittels des statischen Mischers eine Mischung des fluiden Polymerstroms erfolgt. Ein Spalt kann zwischen dem Einbauelement und einer Innenwand des geschlossenen Kanals ausgebildet sein.

Das erste und zweite Einbauelement 5, 6 sind nach diesem Ausführungsbeispiel als zumindest je eine Gruppe von Stegelementen ausgebildet, die sich in einer ersten Gruppenebene 11 und einer zweiten Gruppenebene 12 erstrecken, wobei die erste Gruppenebene 11 einen ersten Winkel 21 mit der Längsachse des geschlossenen Kanals einschliesst und die zweite Gruppenebene 12 einen zweiten Winkel 22 mit der Längsachse 2 des geschlossenen Kanals 1 einschliesst. Gemäss des vorliegenden Ausführungsbeispiels kreuzt sich die erste Gruppenebene 11 mit der zweiten Gruppenebene 12.

Fig. 4b zeigt eine Schnittansicht des geschlossenen Kanals 1 gemäss Fig. 4a, der im Bereich des Eintrittsendes 3 gelegt worden ist. In der Schnittansicht sind das erste Einbauelement 5 und das zweite Einbauelement 6 sichtbar. Gemäss dieses exemplarischen Ausführungsbeispiels bestehen das erste Einbauelement 5 aus zwei Stegelementen und das zweite Einbauelement 6 aus zwei Stegelementen.

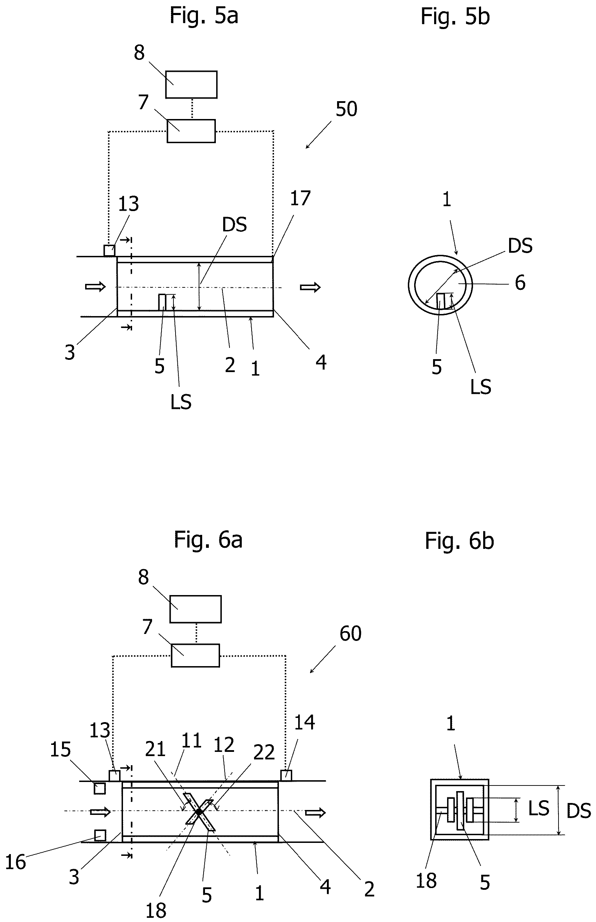

Fig. 5a zeigt eine Inline-Viskositätsmessvorrichtung 50 gemäss eines fünften Ausführungsbeispiels der Erfindung. Die Inline-Viskositätsmessvorrichtung 50 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5 angeordnet ist. Durch die Messstrecke wird ein statischer Mischer ausgebildet. Am Eintrittsende 3 ist ein Eintrittsdrucksensor 13 zur Messung eines Eintrittsdruckmesswerts angeordnet. Am Austrittsende 4 wird ein Austrittsdruckmesswert 17 ermittelt. Gemäss des vorliegenden Ausführungsbeispiels wird am Austrittsende ein Umgebungsdruck ermittelt. Die Inline-Viskositätsmessvorrichtung 50 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Inline-Viskositätsmessvorrichtung 50 kann zusätzlich einen optionalen Durchsatzsensor und/oder einen optionalen Temperatursensor enthalten. Alternativ kann anstelle eines Durchsatzsensors ein anderer Messwertaufnehmer für den Durchsatz vorgesehen werden. Beispielsweise kann eine Drehzahl eines Schneckenelements eines Extruders oder einer Schmelzepumpe ermittelt werden. Mittels des Durchsatzsensors oder eines anderen Messwertaufnehmers kann der Durchsatz des durch den geschlossenen Kanal 1 strömenden fluiden Polymerstroms ermittelt werden. Mittels des optionalen Temperatursensors ist eine Temperatur des durch den geschlossenen Kanal 1 strömenden fluiden Polymerstroms ermittelbar, wobei mittels der Rechnereinheit 8 aus der Druckdifferenz, gegebenenfalls der Temperatur des fluiden Polymerstroms und gegebenenfalls dem Durchsatz des fluiden Polymerstroms ein Viskositätsmesswert mittels einer Berechnungsvorschrift ermittelbar ist. Der fluide Polymerstrom ist kein Seitenstrom mit Rückführung, sodass mittels des statischen Mischers eine Mischung des fluiden Polymerstroms erfolgt. Ein Spalt kann zwischen dem Einbauelement und einer Innenwand des geschlossenen Kanals ausgebildet sein.

Gemäss des vorliegenden Ausführungsbeispiels umfasst das Einbauelement ein erstes Einbauelement 5. Insbesondere ist das erste Einbauelement 5 als zumindest ein Stegelement ausgebildet. Das Stegelement ragt mit einer Stegelementlänge LS in den Strömungskanal hinein, die mindestens 25% eines Durchmessers DS des Strömungskanals beträgt.

Das Stegelement oder die Stegelemente des ersten Einbauelements 5 erstrecken sich von der Innenwand des geschlossenen Kanals 1 in den Innenraum des geschlossenen Kanals 1 bzw. des Strömungskanals.

Selbstverständlich kann das Einbauelement 5 zwei Stegelemente oder mehr als zwei Stegelemente enthalten, beispielsweise drei, vier, fünf, sechs, sieben, acht Stegelemente.

Selbstverständlich kann sich das Einbauelement von der Innenwand bis zur gegenüberliegenden Innenwand des geschlossenen Kanals erstrecken, was in Fig. 5a oder Fig. 5b nicht zeichnerisch dargestellt ist.

Fig. 5b zeigt eine Schnittansicht des geschlossenen Kanals 1 gemäss Fig. 5a, der im Bereich des Eintrittsendes 3 gelegt worden ist, wobei die Schnittebene mit einer strichpunktierten Linie und Pfeilen dargestellt ist. In der Schnittansicht ist das erste Einbauelement 5 sichtbar. Das erste Einbauelement 5 besteht gemäss dieses exemplarischen Ausführungsbeispiels aus einem einzigen Stegelement.

Das zumindest eine Stegelement des ersten Einbauelements 5 kann einen Winkel von 90 Grad in Bezug auf die Längsachse 2 einschliessen, wie in Fig. 5a gezeigt. Der Winkel kann auch von 90 Grad abweichen, was zeichnerisch nicht dargestellt ist.

Fig. 6a zeigt eine Inline-Viskositätsmessvorrichtung 60 gemäss eines sechsten Ausführungsbeispiels der Erfindung. Die Inline-Viskositätsmessvorrichtung 60 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5 angeordnet ist. Durch die Messstrecke wird ein statischer Mischer ausgebildet. Am Eintrittsende 3 ist ein Eintrittsdrucksensor 13 zur Messung eines Eintrittsdruckmesswerts angeordnet. Am Austrittsende 4 ist ein Austrittsdrucksensor 14 zur Messung eines Austrittsdruckmesswerts angeordnet. Alternativ kann am Austrittsende ein Umgebungsdruck ermittelt werden, wie in Fig. 5a gezeigt. Die Inline-Viskositätsmessvorrichtung 60 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Inline-Viskositätsmessvorrichtung 60 kann zusätzlich einen optionalen Durchsatzsensor 15 und/oder einen optionalen Temperatursensor 16 enthalten. Alternativ kann anstelle eines Durchsatzsensors ein anderer Messwertaufnehmer für einen Durchsatz vorgesehen werden. Beispielsweise kann eine Drehzahl eines Schneckenelements eines Extruders oder einer Schmelzepumpe ermittelt werden. Mittels des Durchsatzsensors oder eines anderen Messwertaufnehmers kann der Durchsatz des durch den geschlossenen Kanal 1 strömenden fluiden Polymerstroms ermittelt werden. Mittels des optionalen Temperatursensors ist eine Temperatur des durch den geschlossenen Kanal 1 strömenden fluiden Polymerstroms ermittelbar, wobei mittels der Rechnereinheit 8 aus der Druckdifferenz, gegebenenfalls der Temperatur des fluiden Polymerstroms und gegebenenfalls dem Durchsatz des fluiden Polymerstroms ein Viskositätsmesswert ermittelbar ist. Der fluide Polymerstrom ist kein Seitenstrom mit Rückführung, sodass mittels des statischen Mischers eine Mischung des fluiden Polymerstroms erfolgt. Ein Spalt kann zwischen dem Einbauelement und einer Innenwand des geschlossenen Kanals ausgebildet sein.

Gemäss des vorliegenden Ausführungsbeispiels ist nur ein erstes Einbauelement 5 vorgesehen. Insbesondere enthält das erste Einbauelement 5 zumindest ein Stegelement. Das Stegelement ragt mit einer Stegelementlänge LS in den Strömungskanal hinein, die mindestens 25% eines Durchmessers DS des Strömungskanals beträgt, siehe hierzu auch Fig. 6b.

Das Stegelement oder die Stegelemente des ersten Einbauelements 5 erstrecken sich von der Mittenachse des geschlossenen Kanals 1 in den Innenraum des geschlossenen Kanals 1 bzw. des Strömungskanals. Gemäss des vorliegenden Ausführungsbeispiels weist das Stegelement bzw. jedes der Stegelemente ein erstes Stegelementende und ein zweites Stegelementende auf, wobei weder das erste Stegelementende noch das zweite Stegelementende mit dem geschlossenen Kanal 1 verbunden sind. Insbesondere weisen sowohl das erste Stegelementende als auch das zweite Stegelementende einen Abstand von einer Innenwand des geschlossenen Kanals 1 auf, der mindestens 10% des Innendurchmessers des geschlossenen Kanals, bzw. des Durchmessers DS des Strömungskanals, entspricht. Nach einem Ausführungsbeispiel enthält das Stegelement einen Stegelementarm 18, welcher als ein Verbindungselement mit der Innenwand des geschlossenen Kanals ausgebildet ist. In Fig. 6a ist einer der beiden Stegelementarme 18 im Schnitt dargestellt, da die vordere Seitenwand des geschlossenen Kanals 1 vor der Schnittebene liegt und daher in Fig. 6a weggeschnitten ist.

Nach einem Ausführungsbeispiel sind mindestens 60% der Querschnittsfläche des geschlossenen Kanals 1 durch das oder die Stegelemente abgedeckt. Insbesondere sind mindestens 60% der Querschnittsfläche und maximal 90% der Querschnittsfläche des geschlossenen Kanals durch das oder die Stegelemente abgedeckt. Insbesondere können mindestens zwei Stegelemente vorgesehen sein. Wenn zwei oder mehr Stegelemente vorgesehen sind, können sie miteinander über Stegelementarme 18 verbunden sein, wie in Fig. 6b gezeigt.

Das erste Einbauelement 5 ist nach dem vorliegenden Ausführungsbeispiel als eine Gruppe von Stegelementen ausgebildet, die sich in einer ersten Gruppenebene 11 und einer zweiten Gruppenebene 12 erstrecken, wobei die erste Gruppenebene 11 einen ersten Winkel 21 mit der Längsachse des geschlossenen Kanals einschliesst und die zweite Gruppenebene 12 einen zweiten Winkel 22 mit der Längsachse 2 des geschlossenen Kanals 1 einschliesst. Gemäss des vorliegenden Ausführungsbeispiels kreuzt sich die erste Gruppenebene 11 mit der zweiten Gruppenebene 12. Selbstverständlich kann das erste Einbauelement 5 zwei Stegelemente oder mehr als zwei Stegelemente enthalten, beispielsweise drei, vier, fünf, sechs, sieben, acht Stegelemente. Selbstverständlich kann sich das Einbauelement von der Innenwand bis zur gegenüberliegenden Innenwand des geschlossenen Kanals erstrecken, was in Fig. 6a oder Fig. 6b nicht zeichnerisch dargestellt ist.

Fig. 6b zeigt eine Schnittansicht des geschlossenen Kanals 1 gemäss Fig. 6a, der im Bereich des Eintrittsendes 3 gelegt worden ist, wobei die Schnittebene mit einer strichpunktierten Linie und Pfeilen dargestellt ist. In der Schnittansicht ist das erste Einbauelement 5 sichtbar. Das erste Einbauelement 5 besteht gemäss dieses exemplarischen Ausführungsbeispiels aus drei Stegelementen.

Die Stegelemente des Einbauelements 5 können einen Winkel weniger oder mehr als 90 Grad in Bezug auf die Längsachse 2 einschliessen, wie in Fig. 6a gezeigt. Der Winkel kann auch 90 Grad betragen, was zeichnerisch nicht dargestellt ist.

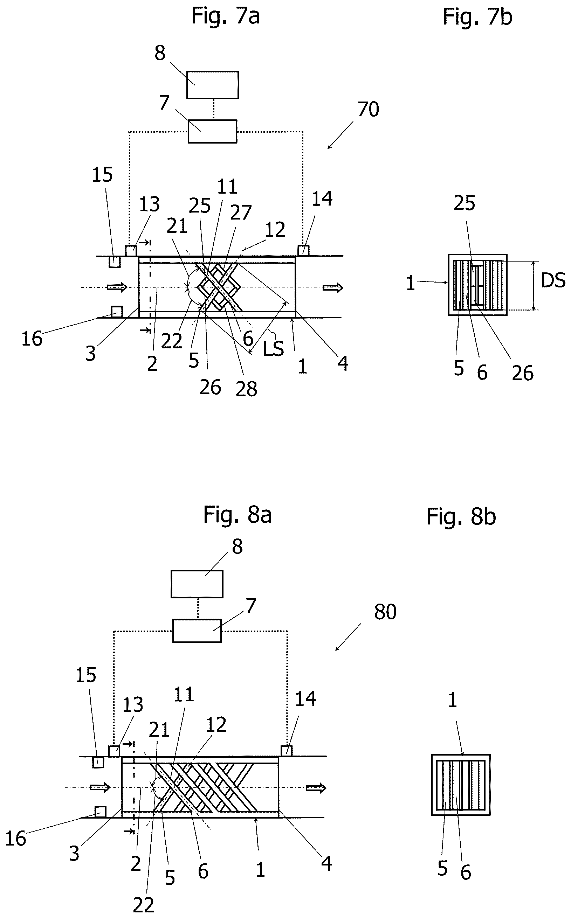

Fig. 7a zeigt eine Inline-Viskositätsmessvorrichtung 70 gemäss eines siebenten Ausführungsbeispiels der Erfindung. Die Inline-Viskositätsmessvorrichtung 70 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5 angeordnet ist. Durch die Messstrecke wird ein statischer Mischer ausgebildet. Am Eintrittsende 3 ist ein Eintrittsdrucksensor 13 zur Messung eines Eintrittsdruckmesswerts angeordnet. Am Austrittsende 4 ist ein Austrittsdrucksensor 14 zur Messung eines Austrittsdruckmesswerts angeordnet. Alternativ kann am Austrittsende ein Umgebungsdruck ermittelt werden, wie in Fig. 5a gezeigt. Die Inline-Viskositätsmessvorrichtung 70 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Inline-Viskositätsmessvorrichtung 70 kann zusätzlich einen optionalen Durchsatzsensor 15 und/oder einen optionalen Temperatursensor 16 enthalten. Alternativ kann anstelle eines Durchsatzsensors ein anderer Messwertaufnehmer für einen Durchsatz vorgesehen werden. Beispielsweise kann eine Drehzahl eines Schneckenelements eines Extruders oder einer Schmelzepumpe ermittelt werden. Mittels des Durchsatzsensors oder eines anderen Messwertaufnehmers kann der Durchsatz des durch den geschlossenen Kanal 1 strömenden fluiden Polymerstroms ermittelt werden. Mittels des optionalen Temperatursensors ist eine Temperatur des durch den geschlossenen Kanal 1 strömenden fluiden Polymerstroms ermittelbar, wobei mittels der Rechnereinheit 8 aus der Druckdifferenz, gegebenenfalls der Temperatur des fluiden Polymerstroms und gegebenenfalls dem Durchsatz des fluiden Polymerstroms der Viskositätsmesswert ermittelbar ist. Der fluide Polymerstrom ist kein Seitenstrom mit Rückführung, sodass mittels des statischen Mischers eine Mischung des fluiden Polymerstroms erfolgt. Ein Spalt kann zwischen dem Einbauelement und einer Innenwand des geschlossenen Kanals ausgebildet sein. Das Einbauelement kann als mindestens ein erstes Einbauelement 5 und als mindestens ein zweites Einbauelement 6 ausgebildet sein.

Gemäss des vorliegenden Ausführungsbeispiels ist ein erstes Einbauelement 5 und ein zweites Einbauelement 6 vorgesehen, welche sich von einer Kanalinnenwand zu einer gegenüberliegenden Kanalinnenwand des geschlossenen Kanals 1 erstrecken. Insbesondere enthalten das erste Einbauelement 5 und das zweite Einbauelement 6 zumindest je ein Stegelement. Das Stegelement weist eine Stegelementlänge LS auf, die grösser als der Innendurchmesser DS des Strömungskanals ist, was in Fig. 7a bzw. Fig. 7b gezeigt ist.

Zusätzlich zu den Stegelementen des ersten Einbauelements 5 und des zweiten Einbauelements erstrecken sich eine Mehrzahl von Stegelementen 25, 26, 27, 28 von der Mittenachse des geschlossenen Kanals 1 in den Innenraum des geschlossenen Kanals 1 bzw. des Strömungskanals. Gemäss des vorliegenden Ausführungsbeispiels weist das Stegelement bzw. jedes der Stegelemente ein erstes Stegelementende und ein zweites Stegelementende auf, wobei jedes der ersten Stegelementenden und zweiten Stegelementenden mit einem ersten Stegelementende oder einem zweiten Stegelementende eines benachbarten Stegelements verbunden ist. Nach dem vorliegenden Ausführungsbeispiel sind vier derartige Stegelemente 25, 26, 27, 28 vorgesehen, die ein Viereck aufspannen. Diese Stegelemente können über nicht dargestellte Stegelementarme mit den Stegelementen des ersten Einbauelements 5 oder mit den Stegelementen des zweiten Einbauelements 6 verbunden sein. Alternativ können zwei in einer Diagonale des Vierecks angeordnete Kanten, welche durch die Stegelementenden von zwei benachbarten Stegelementen ausgebildet werden, mit der Kanalinnenwand des geschlossenen Kanals 1 verbunden sein.

Nach einem Ausführungsbeispiel sind mindestens 60% der Querschnittsfläche des geschlossenen Kanals durch das oder die Stegelemente abgedeckt. Insbesondere sind mindestens 60% der Querschnittsfläche und maximal 90% der Querschnittsfläche des geschlossenen Kanals durch das oder die Stegelemente abgedeckt. Insbesondere können mindestens zwei Stegelemente vorgesehen sein. Wenn zwei oder mehr Stegelemente vorgesehen sind, können sie miteinander über Stegelementarme verbunden sein.

Das erste Einbauelement 5 ist somit nach dem vorliegenden Ausführungsbeispiel als eine Gruppe von Stegelementen ausgebildet, die sich in einer ersten Gruppenebene 11 erstrecken, wobei die erste Gruppenebene 11 einen ersten Winkel 21 mit der Längsachse des geschlossenen Kanals 1 einschliesst. Das zweite Einbauelement 6 ist nach dem vorliegenden Ausführungsbeispiel als eine Gruppe von Stegelementen ausgebildet, die sich in einer zweiten Gruppenebene 12 erstrecken, wobei die zweite Gruppenebene 12 einen zweiten Winkel 22 mit der Längsachse des geschlossenen Kanals 1 einschliesst. Gemäss des vorliegenden Ausführungsbeispiels kreuzt sich die erste Gruppenebene 11 mit der zweiten Gruppenebene 12. Selbstverständlich kann das Einbauelement 5 zwei Stegelemente oder mehr als zwei Stegelemente enthalten, beispielsweise drei, vier, fünf, sechs, sieben, acht Stegelemente. Selbstverständlich können sich das erste Einbauelement 5 und das zweite Einbauelement 6 nicht von der Innenwand bis zur gegenüberliegenden Innenwand des geschlossenen Kanals 1 erstrecken, sondern wie in Fig. 6b gezeigt, über Stegelementarme mit der Innenwand des geschlossenen Kanals verbunden sein.

Fig. 7b zeigt eine Schnittansicht des geschlossenen Kanals 1 gemäss Fig. 7a, der im Bereich des Eintrittsendes 3 gelegt worden ist, wobei die Schnittebene mit einer strichpunktierten Linie und Pfeilen dargestellt ist. In der Schnittansicht ist das erste Einbauelement 5 sowie das zweite Einbauelement 6 sowie die in einem Viereck angeordneten Stegelemente 25, 26 sichtbar. Die dahinter liegenden Stegelemente 27, 28 sind in Fig 7b unsichtbar.

Die Stegelemente des ersten Einbauelements 5 und des zweiten Einbauelements 6 können einen Winkel weniger oder mehr als 90 Grad in Bezug auf die Längsachse 2 einschliessen, wie in Fig. 7a gezeigt. Der Winkel kann auch 90 Grad betragen, was zeichnerisch nicht dargestellt ist.

Fig. 8a zeigt eine Inline-Viskositätsmessvorrichtung 80 gemäss eines achten Ausführungsbeispiels der Erfindung. Die Inline-Viskositätsmessvorrichtung 80 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5 angeordnet ist. Durch die Messstrecke wird ein statischer Mischer ausgebildet. Am Eintrittsende 3 ist ein Eintrittsdrucksensor 13 zur Messung eines Eintrittsdruckmesswerts angeordnet. Am Austrittsende 4 ist ein Austrittsdrucksensor 14 zur Messung eines Austrittsdruckmesswerts angeordnet. Alternativ kann am Austrittsende ein Umgebungsdruck ermittelt werden, wie in Fig. 5a gezeigt. Die Inline-Viskositätsmessvorrichtung 80 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Inline-Viskositätsmessvorrichtung 80 kann zusätzlich einen optionalen Durchsatzsensor 15 und/oder einen optionalen Temperatursensor 16 enthalten. Alternativ kann anstelle eines Durchsatzsensors ein anderer Messwertaufnehmer für einen Durchsatz vorgesehen werden. Beispielsweise kann eine Drehzahl eines Schneckenelements eines Extruders oder einer Schmelzepumpe ermittelt werden. Mittels des Durchsatzsensors oder eines anderen Messwertaufnehmers kann der Durchsatz des durch den geschlossenen Kanal 1 strömenden fluiden Polymerstroms ermittelt werden. Mittels des optionalen Temperatursensors 16 ist eine Temperatur des durch den geschlossenen Kanal 1 strömenden fluiden Polymerstroms ermittelbar, wobei mittels der Rechnereinheit 8 aus der Druckdifferenz, gegebenenfalls der Temperatur des fluiden Polymerstroms und gegebenenfalls dem Durchsatz des fluiden Polymerstroms der Viskositätsmesswert ermittelbar ist. Der fluide Polymerstrom ist kein Seitenstrom mit Rückführung, sodass mittels des statischen Mischers eine Mischung des fluiden Polymerstroms erfolgt. Ein Spalt ist zwischen dem Einbauelement und einer Innenwand des geschlossenen Kanals ausgebildet sein.

Das Einbauelement kann als mindestens ein erstes Einbauelement 5 und als mindestens ein zweites Einbauelement 6 ausgebildet sein.

Zumindest eines der ersten und zweiten Einbauelemente 5, 6 ist als zumindest eine Gruppe von Stegelementen ausgebildet, die sich in einer ersten Gruppenebene 11 und einer zweiten Gruppenebene 12 erstrecken, wobei die erste Gruppenebene 11 einen ersten Winkel 21 mit der Längsachse des geschlossenen Kanals einschliesst und die zweite Gruppenebene 12 einen zweiten Winkel 22 mit der Längsachse 2 des geschlossenen Kanals 1 einschliesst. Gemäss des vorliegenden Ausführungsbeispiels kreuzt sich die erste Gruppenebene 11 mit der zweiten Gruppenebene 12. Nach dem vorliegenden Ausführungsbeispiel sind mehrere erste Gruppenebenen 11 hintereinander in Strömungsrichtung angeordnet. Nach dem vorliegenden Ausführungsbeispiel sind mehrere zweite Gruppenebenen 12 hintereinander in Strömungsrichtung angeordnet. Der Einfachheit halber wurden in Fig. 8a nur für die erste Gruppe von Stegelementen des ersten Einbauelements 5 und die erste Gruppe von Stegelementen des zweiten Einbauelements 6, die dem Eintrittsende 3 nächstgelegen ist, Bezugszeichen verwendet.

Fig. 8b zeigt eine Schnittansicht des geschlossenen Kanals 1 gemäss Fig. 8a, der im Bereich des Eintrittsendes 3 gelegt worden ist. In der Schnittansicht sind das erste Einbauelement 5 und das zweite Einbauelement 6 sichtbar. Gemäss dieses exemplarischen Ausführungsbeispiels enthält jede Gruppe von Stegelementen des ersten Einbauelements 5 zwei Stegelemente und jede Gruppe von Stegelementen des zweiten Einbauelements 6 zwei Stegelemente.

Nach einem Ausführungsbeispiel sind mindestens 60% der Querschnittsfläche des geschlossenen Kanals 1 durch das oder die Stegelemente abgedeckt. Insbesondere sind mindestens 60% der Querschnittsfläche und maximal 90% der Querschnittsfläche des geschlossenen Kanals durch das oder die Stegelemente abgedeckt. Insbesondere können mindestens je vier Stegelemente für das erste Einbauelement 5 vorgesehen sein. Insbesondere können mindestens je vier Stegelemente für das zweite Einbauelement 6 vorgesehen sein. Die Stegelemente des ersten Einbauelements 5 sind kreuzweise zu den Stegelementen des zweiten Einbauelements 6 angeordnet. Benachbarte Stegelemente des ersten und zweiten Einbauelements können miteinander über Stegelementarme verbunden sein. Die Stegelementarme können insbesondere im Kreuzungsbereich der Stegelemente verlaufen.

Das erste Einbauelement 5 ist somit nach dem vorliegenden Ausführungsbeispiel als eine Mehrzahl von Gruppen von Stegelementen ausgebildet, die sich in einer ersten Gruppenebene 11 erstrecken, wobei die erste Gruppenebene 11 einen ersten Winkel 21 mit der Längsachse des geschlossenen Kanals 1 einschliesst. Das zweite Einbauelement 6 ist nach dem vorliegenden Ausführungsbeispiel als Mehrzahl von Gruppen von Stegelementen ausgebildet, die sich in einer zweiten Gruppenebene 12 erstrecken, wobei die zweite Gruppenebene 12 einen zweiten Winkel 22 mit der Längsachse des geschlossenen Kanals 1 einschliesst. Gemäss des vorliegenden Ausführungsbeispiels kreuzt sich die erste Gruppenebene 11 mit der zweiten Gruppenebene 12. Jede der Gruppen von Stegelementen des ersten Einbauelements 5 kann zwei Stegelemente oder mehr als zwei Stegelemente enthalten, beispielsweise drei, vier, fünf, sechs, sieben, acht Stegelemente. Jede der Gruppen von Stegelementen des zweiten Einbauelements 6 kann zwei Stegelemente oder mehr als zwei Stegelemente enthalten, beispielsweise drei, vier, fünf, sechs, sieben, acht Stegelemente. Selbstverständlich können sich das erste Einbauelement 5 und das zweite Einbauelement 6 nicht von der Innenwand bis zur gegenüberliegenden Innenwand des geschlossenen Kanals 1 erstrecken, sondern, wie in Fig. 6b gezeigt, über Stegelementarme mit der Innenwand des geschlossenen Kanals verbunden sein.

Fig. 8b zeigt eine Schnittansicht des geschlossenen Kanals 1 gemäss Fig. 8a, der im Bereich des Eintrittsendes 3 gelegt worden ist, wobei die Schnittebene mit einer strichpunktierten Linie und Pfeilen dargestellt ist. In der Schnittansicht ist jeweils die erste Gruppe von Stegelementen des ersten Einbauelements 5 sowie des zweiten Einbauelements 6 sichtbar.

Die Stegelemente des ersten Einbauelements 5 und des zweiten Einbauelements 6 können einen Winkel 21, 22 von weniger oder mehr als 90 Grad in Bezug auf die Längsachse 2 einschliessen, wie in Fig. 8a gezeigt. Der Winkel kann auch 90 Grad betragen, was zeichnerisch nicht dargestellt ist.

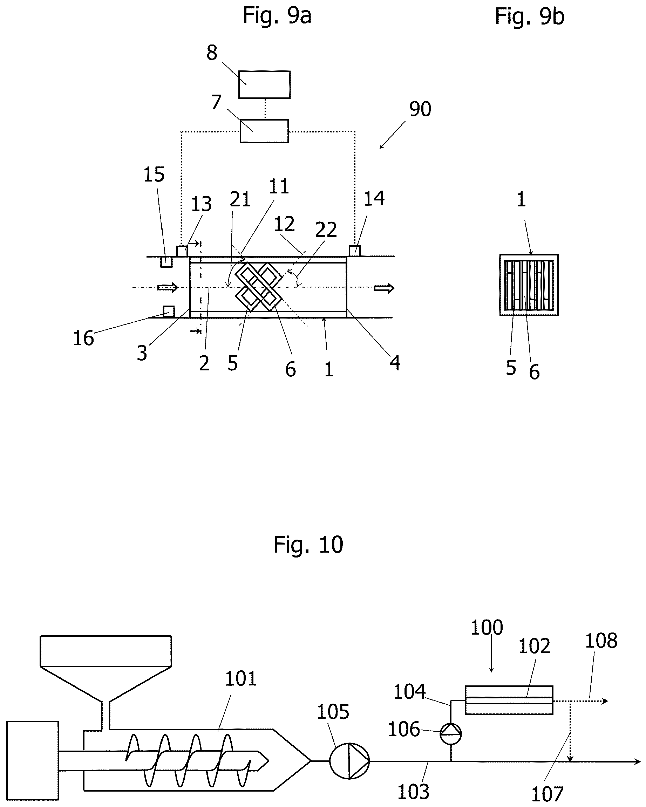

Fig. 9a zeigt eine Inline-Viskositätsmessvorrichtung 90 gemäss eines neunten Ausführungsbeispiels der Erfindung. Die Inline-Viskositätsmessvorrichtung 90 zur Ermittlung eines Viskositätsmesswerts eines fluiden Polymerstroms enthält eine in einem geschlossenen Kanal 1 angeordnete Messstrecke, welche zur Durchströmung des fluiden Polymerstroms ausgebildet ist. Die Messstrecke ist als ein Strömungskanal ausgebildet. Der geschlossene Kanal 1 umfasst eine Längsachse 2, ein Eintrittsende 3 und ein Austrittsende 4. Die Messstrecke erstreckt sich zwischen dem Eintrittsende 3 und dem Austrittsende 4, wobei in der Messstrecke zumindest ein Einbauelement 5 angeordnet ist. Durch die Messstrecke wird ein statischer Mischer ausgebildet. Am Eintrittsende 3 ist ein Eintrittsdrucksensor 13 zur Messung eines Eintrittsdruckmesswerts angeordnet. Am Austrittsende 4 ist ein Austrittsdrucksensor 14 zur Messung eines Austrittsdruckmesswerts angeordnet. Alternativ kann am Austrittsende ein Umgebungsdruck ermittelt werden, wie in Fig. 5a gezeigt. Die Inline-Viskositätsmessvorrichtung 90 enthält einen Wandler 7 zur Umwandlung des Eintrittsdruckmesswerts und des Austrittsdruckmesswerts in von einer Rechnereinheit 8 verarbeitbare Messgrössen, sodass mittels der Rechnereinheit 8 aus den Messgrössen eine Druckdifferenz zwischen dem Eintrittsdruckmesswert und dem Austrittsdruckmesswert ermittelbar ist. Die Inline-Viskositätsmessvorrichtung 90 kann zusätzlich einen optionalen Durchsatzsensor 15 und/oder einen optionalen Temperatursensor 16 enthalten. Alternativ kann anstelle eines Durchsatzsensors ein anderer Messwertaufnehmer für einen Durchsatz vorgesehen werden. Beispielsweise kann eine Drehzahl eines Schneckenelements eines Extruders oder einer Schmelzepumpe ermittelt werden. Mittels des Durchsatzsensors oder eines anderen Messwertaufnehmers kann der Durchsatz des durch den geschlossenen Kanal 1 strömenden fluiden Polymerstroms ermittelt werden. Mittels des optionalen Temperatursensors 16 ist eine Temperatur des durch den geschlossenen Kanal 1 strömenden fluiden Polymerstroms ermittelbar, wobei mittels der Rechnereinheit 8 aus der Druckdifferenz, gegebenenfalls der Temperatur des fluiden Polymerstroms und gegebenenfalls dem Durchsatz des fluiden Polymerstroms der Viskositätsmesswert ermittelbar ist. Der fluide Polymerstrom ist kein Seitenstrom mit Rückführung, sodass mittels des statischen Mischers eine Mischung des fluiden Polymerstroms erfolgt. Ein Spalt kann zwischen dem Einbauelement und einer Innenwand des geschlossenen Kanals ausgebildet sein.

Das Einbauelement kann als mindestens ein erstes Einbauelement 5 und als mindestens ein zweites Einbauelement 6 ausgebildet sein.

Gemäss des vorliegenden Ausführungsbeispiels sind ein erstes Einbauelement 5 und ein zweites Einbauelement 6 vorgesehen, welche sich von einer Kanalinnenwand zu einer gegenüberliegenden Kanalinnenwand des geschlossenen Kanals 1 erstrecken. Insbesondere enthält das erste Einbauelement 5 und das zweite Einbauelement 6 zumindest je ein Stegelement.

Das erste Einbauelement 5 und das zweite Einbauelement 6 enthalten eine Mehrzahl von Stegelementen die ein Viereck aufspannen und eine Stegelementanordnung ausbilden. Gemäss des vorliegenden Ausführungsbeispiels weist jedes der Stegelemente der Stegelementanordnung ein erstes Stegelementende und ein zweites Stegelementende auf, wobei jedes der ersten Stegelementende und zweiten Stegelementenden mit einem ersten Stegelementende oder einem zweiten Stegelementende eines benachbarten Stegelements verbunden ist. Nach dem vorliegenden Ausführungsbeispiel bilden vier derartige Stegelemente eine erste Stegelementanordnung aus, die das erste Einbauelement 5 ausbildet. Nach dem vorliegenden Ausführungsbeispiel wird durch die Stegelementanordnung ein Viereck aufgespannt, insbesondere ein Rechteck. Nach dem vorliegenden Ausführungsbeispiel bilden vier weitere Stegelemente eine zweite Stegelementanordnung aus, die das zweite Einbauelement 6 ausbildet. Die Stegelemente des ersten Einbauelements 5 können über nicht dargestellte Stegelementarme mit den Stegelementen des zweiten Einbauelements 6 oder mit der Kanalinnenwand verbunden sein. Alternativ können zwei in einer Diagonale des Vierecks angeordnete Kanten, welche durch die Stegelementenden von zwei benachbarten Stegelementen ausgebildet werden, mit der Kanalinnenwand des geschlossenen Kanals 1 verbunden sein.

Nach einem Ausführungsbeispiel sind mindestens 60% der Querschnittsfläche des geschlossenen Kanals 1 durch das oder die Stegelemente abgedeckt. Insbesondere sind mindestens 60% der Querschnittsfläche und maximal 90% der Querschnittsfläche des geschlossenen Kanals durch das oder die Stegelemente abgedeckt. Insbesondere können mindestens zwei Stegelementanordnungen vorgesehen sein. Wenn zwei oder mehr Stegelementanordnungen vorgesehen sind, können sie miteinander über Stegelementarme verbunden sein.

Das erste Einbauelement 5 ist somit nach dem vorliegenden Ausführungsbeispiel als eine Gruppe von Stegelementen, die mindestens eine Stegelementanordnung ausbilden können, ausgebildet, die sich in einer ersten Gruppenebene 11 erstrecken, wobei die erste Gruppenebene 11 einen ersten Winkel 21 mit der Längsachse des geschlossenen Kanals 1 einschliesst. Das zweite Einbauelement 6 ist nach dem vorliegenden Ausführungsbeispiel als eine Gruppe von Stegelementen, die mindestens eine Stegelementanordnung ausbilden können, ausgebildet, die sich in einer zweiten Gruppenebene 12 erstrecken, wobei die zweite Gruppenebene 12 einen zweiten Winkel 22 mit der Längsachse des geschlossenen Kanals 1 einschliesst. Gemäss des vorliegenden Ausführungsbeispiels kreuzt sich die erste Gruppenebene 11 mit der zweiten Gruppenebene 12. Selbstverständlich kann das Einbauelement 5 zwei Stegelementanordnungen oder mehr als zwei Stegelementanordnungen enthalten, beispielsweise drei, vier, fünf, sechs, sieben, acht Stegelementanordnungen. Selbstverständlich können sich das erste Einbauelement 5 und das zweite Einbauelement 6 nicht von der Innenwand bis zur gegenüberliegenden Innenwand des geschlossenen Kanals 1 erstrecken, sondern wie in Fig. 6b gezeigt, über Stegelementarme mit der Innenwand des geschlossenen Kanals verbunden sein.

Fig. 9b zeigt eine Schnittansicht des geschlossenen Kanals 1 gemäss Fig. 9a, der im Bereich des Eintrittsendes 3 gelegt worden ist, wobei die Schnittebene mit einer strichpunktierten Linie und Pfeilen dargestellt ist. In der Schnittansicht ist das erste Einbauelement 5 sowie das zweite Einbauelement 6 mit denen jeweils in einem Viereck angeordneten Stegelementen der ersten und zweiten Stegelementanordnungen sichtbar.

Die Stegelemente des ersten Einbauelements 5 sowie des zweiten Einbauelements 6 können einen Winkel weniger oder mehr als 90 Grad in Bezug auf die Längsachse 2 einschliessen, wie in Fig. 9a gezeigt. Der Winkel kann auch 90 Grad betragen, was zeichnerisch nicht dargestellt ist.

Das Stegelement oder zumindest ein Teil der Stegelemente kann sich gemäss jedes der Ausführungsbeispiele über den gesamten Innendurchmesser des geschlossenen Kanals erstrecken.

Der Innendurchmesser kann einem mittleren Durchmesser entsprechen, wenn der Querschnitt des geschlossenen Kanals nicht kreisförmig ist. Der mittlere Durchmesser entspricht dem Innendurchmesser, wenn der geschlossene Kanal mit kreisförmiger Querschnittsfläche ausgeführt ist. Der mittlere Durchmesser für einen eckigen oder ovalen geschlossenen Kanal wird als dessen Umfang / n definiert, es handelt sich somit um einen äquivalenten Durchmesser.

Ein Stegelement ist in seinen Abmessungen durch seine Länge, seine Breite und seine Dicke bestimmt. Die Länge des Stegelements wird vom ersten Ende des Stegelements zum zweiten Ende des Stegelements gemessen.

Die Breite des Stegelements wird im Wesentlichen quer zur Strömungsrichtung gemessen. Das heisst, die Breite erstreckt sich im Wesentlichen in einer Ebene, die normal zur Länge des Stegelements verläuft und den Querschnitt des Stegelements zeigt. Der Querschnitt des Stegelements wird durch dessen Breite und dessen Dicke charakterisiert. Die Länge zumindest des längsten Stegelements ist mindestens 5-mal so gross wie dessen Breite.

Die Breite des Stegelements ist 0.5- bis 5-mal so gross wie dessen Dicke, vorteilhafterweise 0.5- bis 3-mal so gross wie dessen Dicke. Wenn die Breite des Stegelements 0.5 - bis 2-mal so gross wie dessen Dicke ist, ergibt sich ein besonders bevorzugter Bereich, in welchem der Einfluss der Wandeffekte ein Minimum aufweist. Die Breite des Stegelements wird als Normalabstand definiert, welcher sich von der ersten Kante und der zweiten Kante des Stegelements auf der Anströmseite erstreckt. Die Breite des Stegelements auf der Anströmseite kann sich von der Breite des Stegelements, die auf der Abströmseite gemessen wird, unterscheiden.

Unter einer Kante wird die vom Fluid angeströmte und umströmte Kante des Stegelements verstanden, welche sich im Wesentlichen parallel zur Länge des Stegelements erstreckt. Die Dicke des Stegelements kann variabel sein. Dabei liegt die minimale Dicke, um weniger als 75% und vorteilhafterweise um weniger als 50% unter der maximalen Dicke. Die Variationen können beispielsweise durch Rippen, durch Einbuchtungen, durch Noppen, durch keilförmige Stege oder andere Profilvariationen oder Unebenheiten bedingt sein.

Das Stegelement ist dadurch charakterisiert, dass in der Strömungsrichtung ebene Oberflächen, konvexe Oberflächen oder konkave Oberflächen vorliegen, die eine Angriffsfläche für die Polyesterschmelze bieten. Diese in Strömungsrichtung ausgerichteten Flächen bewirken, dass gegenüber einem Stegelement, das als ein Rohrelement mit kreisförmiger Querschnittsfläche ausgebildet ist, ein erhöhter Abströmwiderstand entstehen kann.

Der Übergang von zumindest einem der ersten und zweiten Enden des Stegelements zur Innenwand des geschlossenen Kanals kann insbesondere fliessend ausgebildet sein. Die Stegelemente und der geschlossene Kanal können demnach aus einem einzigen Bauteil bestehen, welches vorzugsweise durch ein Giessverfahren oder ein additives Herstellungsverfahren hergestellt ist. Insbesondere können im Übergangsbereich vom Stegelement zum geschlossenen Kanal an den Kanten Rundungen vorgesehen sein, sodass der Fluss des giessfähigen Materials während des Herstellungsverfahrens des geschlossenen Kanals für die Vorrichtung nicht beeinträchtigt wird.

Fig. 10 zeigt eine vorbekannte Viskositätsmessvorrichtung 100 für die Messung der Viskosität. Diese Viskositätsmessvorrichtung 100 wird in einem Polymerverarbeitungsverfahren verwendet. Ein derartiges Polymer kann beispielsweise mittels eines Extruders 101 kontinuierlich hergestellt werden. Die Viskositätsmessvorrichtung 100 derart ausgebildet, dass die Viskosität des Polymers mittels einer Druckdifferenz über einer Blende oder einer Kapillare 102 ermittelbar ist. Das vorbekannte Viskositätsmessverfahren läuft wie folgt ab: ein Seitenstrom 104 wird vom Polymerstrom 103 abgezweigt und die Viskosität des Seitenstroms 104 wird mittels einer Druckdifferenz über der Blende oder der Kapillare 102 bestimmt, durch welche der Seitenstrom 104 hindurchgeführt wird. Im Polymerstrom ist nach diesem Ausführungsbeispiel eine Pumpe 105 angeordnet, im Seitenstrom 104 ist eine Seitenstrompumpe 106 angeordnet. Die Pumpe 105 im Hauptstrom ist optional. Dieses vorbekannte Viskositätsmessverfahren ist aber mit verschiedenen Nachteilen verbunden. Die Viskosität im Seitenstrom 104 ist nicht repräsentativ für den Polymerstrom 103. Bedingt durch die geringen Seitenstromdurchsätze die insbesondere bei einer Verwendung der Viskositätsmessvorrichtung für Polyester niedrigen Viskositäten sind Blenden oder Kapillaren 102 mit sehr kleinen Durchmessern erforderlich. Diese Blenden oder Kapillaren 102 können aber speziell bei der Verarbeitung von Polymerrezyklaten zur Verstopfung neigen.

Mit den vorbekannten Viskositätsmessvorrichtungen kann die Viskosität von Polymeren aus obigen Gründen nicht prozesssicher gemessen werden. Ein mittels der vorbekannten Viskositätsmessvorrichtung erhaltener Viskositätsmesswert kann somit nicht als Signal für eine Regelung eines Parameters verwendet werden, der die Viskosität beeinflusst und damit nicht zur Steuerung oder Überwachung der Qualität des Polymers verwendet werden, welches mittels des Polymerverarbeitungsverfahrens hergestellt wird. Mit anderen Worten ist bedingt durch die mit der vorbekannten Viskositätsmessvorrichtung inhärente Schwankungsbreite des erhaltenen Signals eine Regelung der Qualität des Polymers basierend auf diesem Signal in der Praxis zu unzuverlässig und daher nicht praktikabel.

Für eine Viskositätsmessung mittels einer Blende oder Kapillare 102 ist ein kontinuierlich fliessender fluider Polymerstrom 103 erforderlich. Zudem wird nur die Viskosität in einem kleinen Seitenstrom 104 gemessen, somit ist der erhaltene Viskositätsmesswert nicht repräsentativ für den Polymerstrom 103. Ein derartiger Seitenstrom 104 liegt in der Regel in einem Grössenbereich, der zwischen 0.1% und 2% des Polymerstroms 103 liegt. Die am Markt erhältlichen Viskositätsmessgeräte sind zudem sehr teuer, da sie eine zusätzliche Seitenstrompumpe 106 zur Förderung des Seitenstroms 104 benötigen.

Vorteilhafterweise kann der Seitenstrom 104 nach dem Durchtritt durch die Viskositätsmessvorrichtung 100 wieder dem Polymerstrom 103 zugeführt werden. Nach diesem Ausführungsbeispiel ist der Seitenstrom 104 als Bypass-Seitenstrom 107 ausgebildet. Bei zu Verstopfung neigenden Polymeren, ist es aber auch möglich, dass der Seitenstrom 104 nach der Messung derart verändert ist, dass seine Rückführung in den Polymerstrom 103 nicht sinnvoll ist, dann entsteht ein Abfallstrom 108, was den zusätzlichen Nachteil hat, dass ein Teil des Polymers für die weitere Verarbeitung unbrauchbar ist und mit höherem Aufwand rezykliert werden muss oder sogar der Entsorgung zugeführt werden muss.

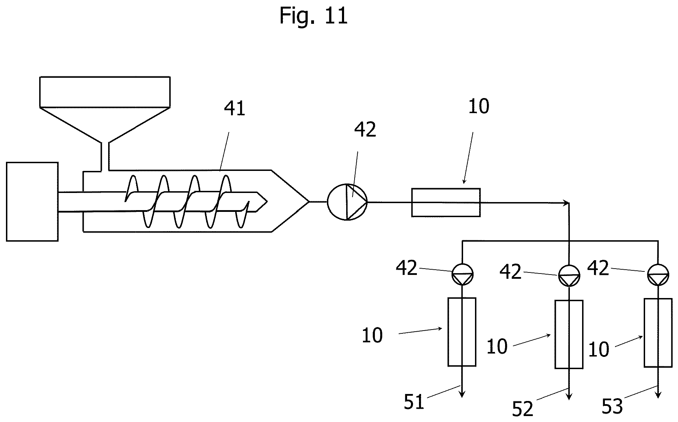

Fig. 11 zeigt die Verwendung der Inline-Viskositätsmessvorrichtung für ein Inline-Viskositätsmessverfahren nach einem der Ausführungsbeispiele in einem kontinuierlichen Polymerverarbeitungsverfahren. Fig. 11 zeigt schematisch als exemplarisches Beispiel eine Extrusionsvorrichtung 41, eine stromabwärts der Extrusionsvorrichtung 41 angeordnete Pumpe 42, beispielsweise eine Schmelzepumpe, eine stromabwärts der Pumpe 42 angeordnete Inline-Viskositätsmessvorrichtung 10 nach einem der vorhergehenden Ausführungsbeispiele zur Durchführung eines Inline-Viskositätsmessverfahrens. Die Inline-Viskositätsmessvorrichtung mit dem Bezugszeichen 10 steht nur exemplarisch für eine der Inline-Viskositätsmessvorrichtungen 10, 20, 30, 40, 50, 60, 70, 80, 90 oder Kombinationen derselben.

Der fluide Polymerstrom kann zur weiteren Verarbeitung in eine Mehrzahl von Teilströmen aufgeteilt werden. Insbesondere kann das Polymerverarbeitungsverfahren derart ausgestaltet sein, dass eine Mehrzahl von Teilströmen 51, 52, 53 in weiteren Verarbeitungsvorrichtungen weiter verarbeitet wird, die zeichnerisch nicht dargestellt werden. Exemplarisch sind in Fig. 11 drei derartige Teilströme 51, 52, 53 gezeigt. Diese Anordnung ist nur als exemplarisches Beispiel zu verstehen. Es können auch zwei Teilströme oder mehr als drei Teilströme vorgesehen sein. In jedem der Teilströme 51, 52, 53 kann eine weitere Pumpe 42 sowie je eine Inline-Viskositätsmessvorrichtung 10 nach einem der vorhergehenden Ausführungsbeispiele für ein Inline-Viskositätsmessverfahren angeordnet sein.

Beispiele:

Für einen kontinuierlichen Extrusionsprozess von Polyester wurden die nachfolgenden Testresultate mittels des erfindungsgemässen Inline-Viskositätsmessverfahrens erhalten, wobei in der Messstrecke ein Durchsatz von 40 kg/h gemessen wurde. Für diesen Test wurde ein Einschneckenextruder mit 40 mm Schneckendurchmesser verwendet. Das Verhältnis von Länge zu Durchmesser betrug 34. Die Schmelzetemperatur lag bei 276 Grad Celsius.

Im Test A wurde ein erfindungsgemässes Einbauelement verwendet, welches als ein statischer Mischer mit gekreuzten Stegelementen ausgebildet ist, wobei das Einbauelement als eine Gruppe von Stegelementen ausgebildet ist, wobei sich die zumindest eine Gruppe von Stegelementen in einer ersten Gruppenebene und einer zweiten Gruppenebene erstreckt, wobei die erste Gruppenebene einen ersten Winkel zur Längsachse des geschlossenen Kanals einschliesst und die zweite Gruppenebene einen zweiten Winkel zur Längsachse des geschlossenen Kanals einschliesst, wobei sich die erste Gruppenebene sich mit der zweiten Gruppenebene kreuzt. Die Messstrecke wies einen Durchmesser von 30 mm und eine Länge von 180 mm auf. Die gemessene Druckdifferenz betrug ungefähr 9.7 bar.

Die gemessene Viskosität betrug 342 Pas. Für diese Messungen betrug die Streuung +/- 15 Pas über einen Zeitraum von 10 min.

In Test B: wurde ein Test A entsprechendes Einbauelement für eine Messstrecke mit einem Durchmesser von 50 mm und einer Länge von 300 mm verwendet. Die gemessene Druckdifferenz betrug ungefähr 2.0 bar. Die gemessene Viskosität betrug 360 Pas. Für diese Messungen betrug die Streuung +/- 90 Pas über einen Zeitraum von 10 min.

Für eine Fachperson ist offensichtlich, dass viele weitere Varianten zusätzlich zu den beschriebenen Verfahren oder Vorrichtungen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

**Patentansprüche**

1. Kontinuierliches Polymerverarbeitungsverfahren enthaltend ein Inline-Viskositätsmessverfahren zur Ermittlung eines Viskositätsmesswerts eines fluiden Polymerstroms, wobei der fluide Polymerstrom eine in einem geschlossenen Kanal (1) angeordnete Messstrecke durchströmt, wobei der geschlossene Kanal (1) eine Längsachse (2), ein Eintrittsende (3) und ein Austrittsende (4) umfasst, wobei sich die Messstrecke zumindest zwischen dem Eintrittsende (3) und dem Austrittsende (4) erstreckt, wobei in der Messstrecke zumindest ein Einbauelement angeordnet ist, wobei ein Eintrittsdruck stromaufwärts des Einbauelements (5, 6) von einem Eintrittsdrucksensor (13) gemessen wird, sodass ein Eintrittsdruckmesswert erhalten wird, wobei ein Austrittsdruck stromabwärts des Einbauelements (5, 6) von einem Austrittsdrucksensor gemessen wird, sodass ein Austrittsdruckmesswert erhalten wird, wobei der Eintrittsdruckmesswert und der Austrittsdruckmesswert mittels eines Wandlers (7) in von einer Rechnereinheit (8) verarbeitbare Messgrössen umgewandelt werden, wobei die Rechnereinheit (8) eine Druckdifferenz zwischen dem Eintrittsdruckmesswert und dem Austrittsdruckmesswert ermittelt, **dadurch gekennzeichnet, dass** eine Regelung einer Viskosität des fluiden Polymerstroms unter Verwendung des mittels des Inline-Viskositätsmessverfahrens erhaltenen Viskositätsmesswerts mittels eines geschlossenen Regelkreises erfolgt.

2. Das kontinuierliche Polymerverarbeitungsverfahren nach Anspruch 1, wobei die Regelung der Viskosität durch Zugabe eines Zusatzstoffs zum fluiden Polymerstrom erfolgt, welcher die Viskosität verändert.

3. Das kontinuierliche Polymerverarbeitungsverfahren nach Anspruch 2, wobei der Zusatzstoff zumindest ein Element aus der Gruppe bestehend aus einem Additiv und mindestens einem weiteren Polymer höherer Viskosität enthält.

4. Das kontinuierliche Polymerverarbeitungsverfahren nach Anspruch 3, wobei das Additiv ein Element aus der Gruppe bestehend aus einem Kettenverlängerungsadditiv, und einem Additiv, welches Wasser enthält oder Wasser abspalten kann, umfasst.

5. Das kontinuierliche Polymerverarbeitungsverfahren nach einem der vorhergehenden Ansprüche, wobei das Polymer zumindest ein Element aus der Gruppe bestehend aus einem Polyester und einem Polyamid umfasst.

6. Das kontinuierliche Polymerverarbeitungsverfahren nach einem der vorhergehenden Ansprüche, wobei mit dem Viskositätsmesswert eine prozessunabhängige Rohstoffkenngrösse bestimmt wird.

7. Das kontinuierliche Polymerverarbeitungsverfahren nach Anspruch 6, wobei die prozessunabhängige Rohstoffkenngrösse ein Element aus der Gruppe bestehend aus einer intrinsischen Viskosität (IV), einer Lösungsviskositätskennzahl und einer Schmelzflussrate umfasst.

8. Das kontinuierliche Polymerverarbeitungsverfahren nach einem der vorhergehenden Ansprüche, wobei der Durchsatz des fluiden Polymerstroms über ein Förderorgan oder ein Durchsatzmessgerät ermittelt wird, wobei aus der Druckdifferenz des fluiden Polymerstroms und dem Durchsatz des fluiden Polymerstroms der Viskositätsmesswert mittels einer Berechnungsvorschrift ermittelt wird, wobei der fluide Polymerstrom kein Seitenstrom mit Rückführung ist.

9. Das kontinuierliche Polymerverarbeitungsverfahren nach Anspruch 8, wobei mittels des Einbauelements eine Mischung des fluiden Polymerstroms erfolgt, wobei das Einbauelement als zumindest eine Gruppe von Stegelementen ausgebildet ist, wobei sich die zumindest eine Gruppe von Stegelementen in einer ersten Gruppenebene und einer zweiten Gruppenebene erstreckt, wobei die erste Gruppenebene einen ersten Winkel zur Längsachse des geschlossenen Kanals einschliesst und die zweite Gruppenebene einen zweiten Winkel zur Längsachse des geschlossenen Kanals einschliesst, wobei sich die erste Gruppenebene sich mit der zweiten Gruppenebene kreuzen kann.

10. Das kontinuierliche Polymerverarbeitungsverfahren nach Anspruch 9, wobei die Stegelemente der Gruppe von Stegelementen mit einer Stegelementlänge LS in den geschlossenen Kanal hineinragen, wobei die Stegelementlänge LS mindestens 25% eines Durchmessers DS des geschlossenen Kanals beträgt.

11. Das kontinuierliche Polymerverarbeitungsverfahren nach einem der vorhergehenden Ansprüche, wobei im statischen Mischer eine Scherrate von 20 [1/s] bis einschliesslich 500 [1/s] gemessen wird.

12. Das kontinuierliche Polymerverarbeitungsverfahren nach einem der vorhergehenden Ansprüche, wobei der Viskositätsmesswert zur Ermittlung eines Signals verwendet wird, welches mit dem Viskositätsmesswert korreliert, wobei mittels eines Regelungsverfahrens mit dem Signal als Eingangsgrösse ein Parameter geregelt wird, welcher den Viskositätsmesswert des Polymers verändert.

13. Das kontinuierliche Polymerverarbeitungsverfahren nach einem der vorhergehenden Ansprüche 9 bis 12, wobei das Förderorgan als eine Schmelzepumpe ausgebildet ist, wobei der Durchsatz über eine Drehzahl einer Schmelzepumpe ermittelt wird, wobei sich zwischen einem Austritt der Schmelzepumpe und dem Eintrittsende des geschlossenen Kanals ein Abstand befinden kann, wobei der Abstand maximal dem fünffachen des Innendurchmessers des geschlossenen Kanals entsprechen kann.

14. Das kontinuierliche Polymerverarbeitungsverfahren nach einem der vorhergehenden Ansprüche, wobei mittels eines Temperatursensors (16) eine Temperatur des fluiden Polymerstroms ermittelt wird.

15. Das kontinuierliche Polymerverarbeitungsverfahren nach einem der vorhergehenden Ansprüche, wobei der fluide Polymerstrom ein Polymerrezyklat enthält.

Fig. 1a

Fig. 1b

Fig. 2a

Fig. 2b

Fig. 3a

Fig. 3b

Fig. 4a

Fig. 4b

Fig. 5a

Fig. 5b

Fig. 6a

Fig. 6b

Fig. 7a

Fig. 7b

Fig. 8a

Fig. 8b

## Fig. 9a

## Fig. 9b

## Fig. 10

Fig. 11

Europäisches
Patentamt
European
Patent Office
Office européen
des brevets

# EUROPÄISCHER RECHERCHENBERICHT

**Nummer der Anmeldung**

EP 25 21 0535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 6 412 337 B1 (ARZATE ALFA [CA] ET AL) 2. Juli 2002 (2002-07-02) * Zusammenfassung; Abbildungen 1, 4 * ----- | 1-15 | INV. G01N11/08 B29B7/32 |
| X | EP 3 579 069 A1 (COVESTRO DEUTSCHLAND AG [DE]) 11. Dezember 2019 (2019-12-11) * Zusammenfassung; Abbildungen 1, 2 * * Absätze [0002], [0039] - [0042] * ----- | 1-15 | ADD. G01N11/00 |
| X | US 2017/058177 A1 (RAMESH AVINASH [US] ET AL) 2. März 2017 (2017-03-02) * Absätze [0019], [0023], [0036], [0038], [0045] - [0057]; Abbildung 7 * ----- | 1-15 | |
| Y | US 2022/325455 A1 (SASAI YUYA [JP] ET AL) 13. Oktober 2022 (2022-10-13) * Absätze [0112] - [0113]; Abbildung 17 * ----- | 1-15 | |
| A | US 2021/148650 A1 (HEUSSER ROLF [CH]) 20. Mai 2021 (2021-05-20) * Absatz [0036]; Abbildungen 1-8 * ----- | 1-15 | |
| A | US 4 049 241 A (TANIGUCHI TORU) 20. September 1977 (1977-09-20) * Abbildungen 1, 2 * ----- | 1-15 | **RECHERCHIERTE SACHGEBIETE (IPC)** G01N B29B B01F B29C |

Der vorliegende Recherchenbericht wurde für alle Patentansprüche erstellt

| Recherchenort | Abschlußdatum der Recherche | Prüfer |
|---|---|---|
| Den Haag | 18. Dezember 2025 | Giráldez Sánchez, J |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**  EP 25 21 0535

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-12-2025

| Im Recherchenbericht angeführtes Patentdokument | Datum der Veröffentlichung | Mitglied(er) der Patentfamilie | Datum der Veröffentlichung |
|---|---|---|---|
| US 6412337 B1 | 02-07-2002 | AU 2991701 A | 07-08-2001 |
| | | CA 2365621 A1 | 02-08-2001 |
| | | EP 1166083 A1 | 02-01-2002 |
| | | US 6412337 B1 | 02-07-2002 |
| | | WO 0155696 A1 | 02-08-2001 |
| EP 3579069 A1 | 11-12-2019 | CN 112262351 A | 22-01-2021 |
| | | EP 3579069 A1 | 11-12-2019 |
| | | EP 3803523 A1 | 14-04-2021 |
| | | ES 2914703 T3 | 15-06-2022 |
| | | KR 20210018260 A | 17-02-2021 |
| | | WO 2019233928 A1 | 12-12-2019 |
| US 2017058177 A1 | 02-03-2017 | AU 2015252820 A1 | 17-11-2016 |
| | | BR 112016025600 A2 | 19-01-2021 |
| | | CA 2946764 A1 | 05-11-2015 |
| | | DK 3137873 T3 | 31-01-2022 |
| | | EP 3137873 A1 | 08-03-2017 |
| | | RU 2646943 C1 | 12-03-2018 |
| | | US 2017058177 A1 | 02-03-2017 |
| | | WO 2015168689 A1 | 05-11-2015 |
| US 2022325455 A1 | 13-10-2022 | CN 113348183 A | 03-09-2021 |
| | | JP 6949342 B1 | 13-10-2021 |
| | | JP WO2021132175 A1 | 23-12-2021 |
| | | KR 20210087542 A | 12-07-2021 |
| | | TW 202128848 A | 01-08-2021 |
| | | US 2022325455 A1 | 13-10-2022 |
| | | US 2023392308 A1 | 07-12-2023 |
| | | WO 2021132175 A1 | 01-07-2021 |
| US 2021148650 A1 | 20-05-2021 | EP 3822569 A1 | 19-05-2021 |
| | | ES 2952263 T3 | 30-10-2023 |
| | | US 2021148650 A1 | 20-05-2021 |
| US 4049241 A | 20-09-1977 | JP S5184456 A | 23-07-1976 |
| | | JP S5426745 B2 | 05-09-1979 |
| | | US 4049241 A | 20-09-1977 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3579069 A1
- US 6412337 B1
- US 4680957 A